# EUROPÄISCHE PATENTSCHRIFT

(11) **EP 3 018 107 B1**
(45) Veröffentlichungstag und Bekanntmachung des Hinweises auf die Patenterteilung: **19.07.2017**
(21) Anmeldenummer: 15189301.3
(22) Anmeldetag: 12.10.2015
(51) Int. Cl.: C03C 3/118, C03C 3/097, C03C 3/087, C03C 10/12, C03C 10/14

(54) **HOCHKRISTALLINE LITHIUMALUMINIUMSILIKAT-GLASKERAMIK UND IHRE VERWENDUNG**
HIGHLY CRYSTALLINE LITHIUM ALUMINIUM SILICATE GLASS CERAMIC MATERIAL AND USE OF SAME
VITROCERAMIQUE EN ALUMINOSILICATE DE LITHIUM HAUTEMENT CRISTALLINE ET SON UTILISATION

(30) Priorität: 06.11.2014 DE 102014222645
(43) Veröffentlichungstag der Anmeldung: 11.05.2016
(73) Patentinhaber: Schott AG, 55122 Mainz (DE)
(72) Erfinder: SIEBERS, Friedrich, 55283 Nierstein (DE); RUEDINGER, Bernd, 55286 Woerrstadt (DE); GABEL, Falk, 65388 Schlangenbad (DE); WEISS, Evelin, 55131 Mainz (DE)
(74) Vertreter: Harbach, Thomas

(56) Entgegenhaltungen:
- EP-A1- 1 837 313
- DE-A1-102004 024 583
- DE-A1-102012 202 697

## Beschreibung

Die Erfindung betrifft eine hochkristalline Lithiumaluminiumsilikat-Glaskeramik gemäß dem Oberbegriff des Anspruchs 1. Die Erfindung betrifft auch die Verwendung einer solchen LAS-Glaskeramik.

Es ist bekannt, dass sich Gläser aus dem System Li₂O-Al₂O₃-SiO₂ in Glaskeramiken mit Hochquarz-Mischkristallen und/oder Keatit-Mischkristallen als Hauptkristallphasen umwandeln lassen. Für den ersten Typ von Glaskeramiken finden sich in der Literatur auch die Synonyme "β-Quarz" oder "β-Eukryptit" und für den zweiten Typ "β-Spodumen" als Bezeichnung für die Kristallphasen.

Eine Schlüsseleigenschaft dieser Glaskeramiken ist, dass sie in einem Temperaturbereich von Raumtemperatur bis etwa 700°C über einen äußerst niedrigen thermischen Ausdehnungskoeffizienten α_{20/700} von üblicherweise unter 1,5·10⁻⁶/K verfügen. Glaskeramiken mit Hochquarz-Mischkristallen als Hauptkristallphase verfügen über niedrigere Ausdehnungskoeffizienten im Bereich ihrer Anwendungstemperaturen, meist um 0 ± 0,3 •10⁻⁶/K, während die Glaskeramiken mit Keatit-Mischkristallen als Hauptkristallphase bei Werten um 0,8 ·10⁻⁶/K bis 1,5·10⁻⁶/K liegen. Auch in ihren mittleren Kristallitgrößen unterscheiden sich die beiden Glaskeramiktypen. Glaskeramiken mit Hochquarz-Mischkristallen sind aufgrund ihrer niedrigeren Kristallitgröße von üblicherweise unter 50 nm transparent oder transparent eingefärbt herstellbar. Solche mit Keatit-Mischkristallen als Hauptkristallphase besitzen üblicherweise mittlere Kristallitgrößen über 100 nm und sind wegen der resultierenden Lichtstreuung transluzent bis opak.

Durch Zusatz von Farboxiden wie V₂O₅, CoO, NiO, Fe₂O₃, Cr₂O₃, MnO₂, CeO₂ einzeln oder in Kombination können die Glaskeramiken eingefärbt werden, um zum Beispiel schwarze Kochflächen mit bestimmtem Transmissionsverlauf herzustellen.

Aufgrund der niedrigen thermischen Ausdehnung bei ihren Anwendungstemperaturen besitzen diese Glaskeramiken eine ausgezeichnete Temperaturunterschiedsfestigkeit und Temperaturwechselbeständigkeit sowie Dimensionskonstanz. Durch die hohe Transformationstemperatur der Restglasphase werden hohe Anwendungstemperaturen ermöglicht. Um auch die mechanische Festigkeit gegenüber Kratz-, Biegezug- und Stoßbeanspruchung sowie ballistischem Beschuss zu erhöhen, ist ein hochkristallines Gefüge/Mikrostruktur von Vorteil. Das bedeutet, dass ein hoher Kristallphasenanteil verbunden mit einem niedrigen Anteil an Restglasphase angestrebt werden sollte.

Neben der Restglasphase und der Hauptkristallphase aus Hochquarz- bzw. Keatit-Mischkristallen enthält die Glaskeramik als Nebenkristallphase die Keimkristalle. Diese bestehen üblicherweise aus ZrO₂/TiO₂-Mischkristallen. Auch SnO₂ kann an der Keimbildung beteiligt und Bestandteil der Mischkristalle sein. Der Phasenanteil der Keimkristalle beträgt zwischen 2 Gew.-% bis 5 Gew.-%. In diesem Wertebereich findet ausreichende Keimbildung statt, und eine unkontrollierte Entglasung kann vermieden werden.

Bei der großtechnischen Herstellung von Glaskeramiken wird zunächst das kristallisierbare Ausgangsglas aus einem Gemisch aus Scherben und pulverförmigen Gemengerohstoffen bei Temperaturen üblicherweise zwischen 1550 °C und 1700 °C geschmolzen und geläutert. Als Läutermittel werden meist Arsen- und/oder Antimonoxid und neuerdings für umweltfreundliche Läuterung Zinnoxid eingesetzt. Zur Verbesserung der Blasenqualität kann auch eine Hochtemperaturläuterung oberhalb 1700 °C eingesetzt werden. Für transparente Glaskeramiken ist Arsenoxid hinsichtlich hoher Lichttransmission und geringer Farbe der Glaskeramik vorteilhaft.

Nach dem Einschmelzen und Läutern erfährt das Glas üblicherweise eine Heißformgebung durch Gießen, Pressen oder durch Walzen oder Floaten um Platten herzustellen.

In einem anschließenden Temperaturprozess wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 680 °C und 800°C Keime, üblicherweise aus ZrO₂/TiO₂-Mischkristallen erzeugt werden. Bei anschließender Temperaturerhöhung wachsen bei der Kristallisationstemperatur von 800 °C bis 950 °C die Hochquarz-Mischkristalle auf diesen Keimen auf.

Bei der maximalen Herstelltemperatur wird das Gefüge der Glaskeramik homogenisiert und werden die optischen, physikalischen und chemischen Eigenschaften eingestellt.

Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 950 °C bis 1250°C. Mit der Umwandlung erhöht sich der thermische Ausdehnungskoeffizient der Glaskeramik, und durch weiteres Kristallwachstum tritt Lichtstreuung verbunden mit transluzentem bis opakem Aussehen auf. Bei der Umwandlung erhöht sich die Kristallinität und die Glaskeramiken werden fester.

Für die optische Qualität transparenter Glaskeramiken mit Hochquarz-Mischkristallen als Hauptkristallphase sind Transparenz und geringe Eigenfarbe maßgeblich. Transparenz bedeutet, dass die Glaskeramiken über hohe Lichttransmission im sichtbaren Bereich sowie geringe Lichtstreuung (Trübung) verfügen sollen.

Die Lichttransmission gemessen im CIE-Farbsystem als Lichttransmission Y (brightness) soll daher möglichst hoch sein. Die Färbung der transparenten farbarmen Lithiumaluminiumsilikat-Glaskeramik, meist dargestellt als Buntheit c* im CIELAB-Farbsystem, soll gering sein, damit die Farbe bei Durchsicht auf Gegenstände, Farbschichten sowie die Farbe von Anzeigen nicht verfälscht wird. Die transparente Glaskeramik soll über keine visuell störende Lichtstreuung verfügen, damit die Durchsicht auf Gegenstände und leuchtende Anzeigen nicht verfälscht wird. Die Anzeigen von Displays unter der Glaskeramikplatte sollen klar, die Konturen scharf und ohne Trübung sichtbar sein.

Die geringe Lichtstreuung wird unter anderem über eine hohe Keimdichte erreicht, die dazu führt, dass die aufwachsenden Hochquarz-Mischkristalle mit ihrer Größe unterhalb des Bereiches der Wellenlänge des sichtbaren Lichtes liegen. Typischerweise liegt die mittlere Kristallitgröße der Hochquarz-Mischkristalle im Bereich von 20 nm bis 50 nm. Eine hohe Keimdichte setzt ausreichende Gehalte an Keimbildnern sowie ausreichende Keimbildungszeiten während der Keramisierung voraus. Für eine geringe Streuung sind weiterhin geringe Doppelbrechung der Kristalle und eine gute Anpassung der Brechungsindizes von Kristallen und Restglasphase erforderlich. Diese Bedingungen für hohe Transparenz von LAS-Glaskeramiken sind dargestellt in dem Artikel "Nanophase Glass-Ceramics, Journal of the American Ceramic Society, Vol. 82, No. 1, pp. 5-16; 1999 von den Autoren Beall und Pickney.

Der Brechungsindex der Restglasphase wird durch ihre Zusammensetzung und die Abkühlrate bei der Keramisierung eingestellt.

Die Eigenfarbe transparenter Glaskeramikplatten kann verschiedene Ursachen haben. In den Gemengerohstoffen für die Schmelzen sind färbende Fe-Ionen als Verunreinigung enthalten. Die bräunlich gelbe Eigenfärbung der transparenten Glaskeramiken beruht maßgeblich auf elektronischen Übergängen an Farbkomplexen, die im kurzwelligen Bereich des sichtbaren Lichtes absorbieren und an denen die für die Keimbildung notwendige Komponente TiO₂ beteiligt ist. Der häufigste absorbierende Farbkomplex ist die Ausbildung von benachbarten Fe- und Ti-Ionen, zwischen denen elektronische Charge-Transfer-Übergänge stattfinden. Sn/Ti-Komplexe bewirken ebenfalls eine Eigenfarbe. Die Ausbildung dieser Farbkomplexe findet insbesondere beim Keramisieren der Glaskeramiken statt. Durch Absorption im kurzwelligen Teil des sichtbaren Spektrums erhalten die transparenten Glaskeramiken eine deutliche Eigenfarbe, die mit steigender Dicke stark zunimmt.

Absorption und Streuung sind die optischen Phänomene, die bei wirtschaftlicher Herstellung beherrscht werden müssen.

Um ausreichende Keimbildung sicherzustellen, sind Mindestgehalte des Keimbildners TiO₂ erforderlich, da dieser Keimbildner nur mit Nachteilen bei Schmelze und Formgebung durch die alternativen Keimbildner ZrO₂ und SnO₂ ersetzt werden kann.

Um die Konzentrationen der Farbkomplexe zu verringern, ist es vorteilhaft, die Keimbildungs- und Kristallisationszeiten zu verkürzen. Dem steht entgegen, dass die Verkürzung der Keimbildungszeit zu verstärkter Lichtstreuung und die Verkürzung der Kristallisationszeit zu Unebenheiten auf der Produktoberfläche führen können.

Bei zahlreichen Anwendungen von Glaskeramiken werden diese in Form von Scheiben benötigt, je nach Anwendung in Dicken von ca. 1 mm bis 20 mm. Durch Heißnachverarbeitung der kristallisierbaren Gläser oder bei der Keramisierung ist es möglich, die Scheiben dreidimensional zu verformen.

Aus wirtschaftlichen Gründen ist es vorteilhaft, wenn aus der gleichen Zusammensetzung des kristallisierbaren Lithiumaluminiumsilikatglases sowohl transparente Glaskeramiken mit Hochquarz-Mischkristallen als Hauptkristallphase als auch transluzente oder opake Glaskeramiken mit Keatit-Mischkristallen als Hauptkristallphase hergestellt werden können. Dies ist bei geeigneten Zusammensetzungen durch die Ausgestaltung des Keramisierungsverfahrens, insbesondere durch die Wahl von Maximaltemperatur und Haltezeit, möglich. Durch die unterschiedlichen Eigenschaftskombinationen der beiden Glaskeramik-Ausführungen wird eine Vielzahl von Anwendungen vorteilhaft bedient.

Für eine wirtschaftliche Herstellung der Glaskeramiken sind eine niedrige Schmelztemperatur und eine niedrige Verarbeitungstemperatur V_{A} der Ausgangsgläser gewünscht. Weiterhin darf das Glas bei der Formgebung keine Entglasung zeigen, das heißt, es dürfen sich keine störenden Kristalle bilden, die in den Ausgangsgläsern und daraus hergestellten Glaskeramiken die Festigkeit beeinträchtigen.

So beschreibt die WO 2005/058766 A1 transparente, transluzente oder opake Glaskeramiken, die Hochquarz- oder Keatit-Mischkristalle enthalten. Diese Glaskeramiken weisen hohe Restglasphasenanteile auf. Diese sind für die mechanischen Eigenschaften und die Temperaturstabilität von Nachteil.

Die DE 10 2004 024 583 A1 beschreibt Glaskeramiken die Keatit-Mischkristalle enthalten und eine Restglasphasenanteil von kleiner als 8 Gew.-% aufweist.

DieDE 10 2012 202 697 A1 und EP 1 837 313 A1 beschreiben Glaskeramiken die Hochquarz-Mischkristalle enthalten. Diese Glaskeramiken weisen hohe Restglasphasenanteile auf. Es ist Aufgabe der Erfindung, Lithiumaluminiumsilikat-Glaskeramiken mit hoher Kristallinität verbunden mit niedrigen Anteilen an Restglasphase zu finden, die bei gleicher Zusammensetzung der kristallisierbaren Ausgangsgläser je nach Wahl der Herstellbedingungen aus Hochquarz- oder Keatit-Mischkristallen als Hauptkristallphase bestehen. Die Glaskeramiken sollen wirtschaftliche Fertigungseigenschaften insbesondere hinsichtlich der Schmelz- und Formgebungstemperaturen der Ausgangsgläser besitzen wie kostengünstige Gemengerohstoffe, niedrige Schmelz- und Formgebungstemperaturen, Entglasungsfestigkeit und kurze Keramisierungszeiten.

Es ist auch Aufgabe der Erfindung, Verwendungen für die aus den LAS-Glaskeramiken hergestellten Artikel zu finden.

Hierbei sollen die Glaskeramiken den Anforderungen der unterschiedlichen Anwendungen an z. B. chemische Beständigkeit, mechanische Festigkeit, Transmission, Temperaturbelastbarkeit und Langzeitstabilität hinsichtlich Änderungen ihrer Eigenschaften (wie z.B. thermische Ausdehnung, Transmission, Aufbau von Spannungen) genügen.

Für viele Anwendungen, bei denen es auf geringes Gewicht des Artikels ankommt, ist weiterhin eine geringe Dichte der Glaskeramik vorteilhaft.

Diese Aufgaben werden durch eine Lithiumaluminiumsilikat-Glaskeramik gemäß Anspruch 1 und durch deren Verwendung gemäß den Ansprüchen 15, 16 und 17 gelöst.

Um diese vielfältigen Anforderungen zu lösen, wurde gefunden, dass die Mikrostruktur der Glaskeramik gezielt einzustellen ist und eingestellt werden kann. Der erfindungsgemäße Ansatz besteht darin, die Mikrostruktur der Glaskeramik, d.h. Kristallitphase und Restglasphase, gezielt einzustellen und den Anteil an Restglasphase zu minimieren. Der Gehalt an Restglasphase soll weniger als 20 Gew.-%, bevorzugt weniger als 18 Gew.-% betragen. Dabei kommt den Komponenten, die die Kristallphasen bilden, und denen, die bevorzugt in die Restglasphase gehen, eine Schlüsselstellung zu.

Um eine hohe Kristallinität der Glaskeramik, das heißt einen hohen Kristallphasenanteil und geringen Restglasanteil, zu erreichen, ist es vorteilhaft, den Gehalt der Komponenten, die in die Mischkristalle eingebaut werden gegenüber denen, die in der Restglasphase verbleiben, zu erhöhen. Die betreffenden Gehalte müssen dabei sorgfältig abgestimmt werden, da es bei zu niedrigen Anteilen an Restglasbildnern bei der Formgebung des Glases zu unerwünschter Kristallisation (Entglasung) kommt.

Für die Änderung der oben genannten Eigenschaften ist die Menge und Zusammensetzung der Restglasphase von maßgeblicher Bedeutung. Bei Temperaturbelastung eines Artikels wird die Temperatur lokal unterschiedlich einwirken (Höhe, Dauer). Dadurch kann es zu lokal unterschiedlichen Änderungen der Dichte (compaction) und zu Spannungen im Artikel kommen. Der erfindungsgemäß niedrige Restglasanteil ist daher vorteilhaft für eine niedrige compaction, die den Aufbau von Spannungen bei Temperaturbelastung verursacht.

Gemäß einer ersten Ausführungsform enthält die hochkristalline LAS-Glaskeramik als Hauptbestandteile die Komponenten (in Gew.-% auf Oxidbasis):

| | |
|---|---|
| Li₂O | > 4,0 - 4,6 |
| Na₂O+K₂O | 0 - < 0,4 |
| MgO | 0,2 - 0,8 |
| CaO+SrO | 0,05 - 1,0 |
| BaO | 0 - < 0,5 |
| ZnO | 1,0 - 2,0 |
| Al₂O₃ | 19 - 23 |
| SiO₂ | 66 - < 70 |
| TiO₂ | 2,0 - 2,4 |
| ZrO₂ | 1,6 - < 2,0 |
| SnO₂ | 0 - 0,4 |
| P₂O₅ | 0 - 3 |
| B₂O₃ | 0 - 1,0 |

sowie gegebenenfalls Zusätze chemischer Läutermittel wie As₂O₃, Sb₂O₃, CeO₂ und von Läuterzusätzen wie Manganoxid, Sulfat-, Chlorid-, Fluoridverbindungen in Gesamtgehalten bis zu 2,0 Gew.-%.

Bevorzugt wird auf Cer- und Antimonoxid verzichtet, da diese mit dem vorhandenen Keimbildner TiO₂ Farbkomplexe bilden, die in transparenten Glaskeramiken absorbieren.

Die Oxide Li₂O, Al₂O₃ und SiO₂ in den angegebenen engen Grenzen sind Bestandteile der Hochquarz- und Keatit-Mischkristalle.

Der Mindestgehalt an Li₂O von mehr als 4 Gew.-% ist für eine hohe Kristallinität erforderlich und für niedrige Schmelz- und Formgebungstemperaturen vorteilhaft. Höhere Gehalte als 4,6 Gew.-% sind nachteilig, weil dann die Kristallisation der Glaskeramik schwer zu kontrollieren ist, und wegen der hohen Kosten von Li-Rohstoffen.

Bevorzugt beträgt der Gehalt an Li₂O mindestens 4,1 Gew.-%, um eine hohe Kristallinität einzustellen.

Um höhere Viskositäten des Ausgangsglases und die Entglasung von Mullit bei der Formgebung zu vermeiden, ist der Al₂O₃-Gehalt auf maximal 23 Gew.-% begrenzt. Der Mindestgehalt für die Bildung ausreichender Mengen der Kristallphase beträgt 19 Gew.-%.

Der SiO₂-Gehalt soll weniger als 70 Gew.-% und bevorzugt maximal 69 Gew.-% betragen, weil diese Komponente die Viskosität des Glases und damit Schmelztemperatur und Formgebungstemperatur V_{A} und stark erhöht. Für gutes Einschmelzen der Gläser und für niedrige Schmelz- und Formgebungstemperaturen sind höhere Gehalte von SiO₂ unwirtschaftlich. Der Gehalt an SiO₂ soll mindestens 66 Gew.-% betragen, weil dies für die geforderten Eigenschaften, wie hohe Kristallinität, chemische Beständigkeit, mechanische Festigkeit, thermische Eigenschaften und geringe Dichte vorteilhaft ist.

Die Zugabe der Alkalien Na₂O und K₂O sowie der Erdalkalien CaO, SrO, BaO verbessert die Schmelzbarkeit und die Entglasungsfestigkeit bei der Formgebung des Glases. Das Einschmelzen der schwerlöslichen Rohstoffe für ZrO₂ und SiO₂ wird beschleunigt, und die Schmelz- sowie die Verarbeitungstemperatur werden erniedrigt. Die Gehalte müssen jedoch begrenzt werden, weil diese Komponenten nicht in die Kristallphasen eingebaut werden, sondern in der Restglasphase der Glaskeramik verbleiben. So kann die erfindungswesentliche Eigenschaft einer geringen Restglasphase erreicht werden. Höhere Gehalte wirken sich ungünstig auf mechanische Eigenschaften und die Zeit-/Temperaturbelastbarkeit der Glaskeramik aus. Die Summe der Alkalioxide Na₂O und K₂O beträgt 0 bis weniger als 0,4 Gew.-%, bevorzugt höchstens 0,3 Gew.-% und bevorzugt wenigstens 0,05 Gew.-%.

Die Summe der Erdalkalioxide CaO und SrO beträgt wenigstens 0,05 Gew.-%, bevorzugt wenigstens 0,1 Gew.-%. Sie beträgt höchstens 1 Gew.-%, bevorzugt höchstens 0,8 Gew.-%. Die Glaskeramik soll diese Komponenten mit den angegebenen Grenzen als Restglasbestandteile enthalten. CaO und SrO sind als Bestandteile der Restglasphase für mechanische und thermische Eigenschaften gegenüber den Alkalien Na₂O und K₂O vorteilhafter und sind für die günstigen Fertigungseigenschaften erforderlich. Der BaO-Gehalt beträgt 0 bis weniger als 0,5 Gew.-%, vorzugsweise 0 bis 0,3 Gew.-% weil diese Komponente die Dichte erhöht.

Anteile von MgO und ZnO werden in die Mischkristalle des Hochquarz- und in die des Keatit-Typs eingebaut. Ein MgO- Mindestgehalt von 0,2 Gew.-% wird benötigt, weil diese Komponente besonders effektiv ist, um die Schmelztemperatur (dargestellt durch die 10²-Temperatur) abzusenken. Dies ist die Temperatur, bei der die Viskosität der geschmolzenen Glaszusammensetzung 10² dPas beträgt. Diese Eigenschaft ist wichtig für die wirtschaftliche Herstellung. Der MgO-Gehalt ist auf maximal 0,8 Gew.-% begrenzt. Höhere MgO-Gehalte sind nachteilig, weil sie den Ausdehnungskoeffizienten der Glaskeramik unzulässig erhöhen und MgO auch in die Restglasphase eingebaut wird. Die Komponente ZnO hat sich als besonders günstig für die Transparenz der Glaskeramik erwiesen und erlaubt es zusammen mit dem Li₂O, die niedrige und sogar negative thermische Ausdehnung einzustellen. Der ZnO-Gehalt soll mindestens 1 Gew.-% betragen. Der ZnO-Gehalt ist wegen der Verdampfungsneigung bei Schmelze und Formgebung auf Werte von höchstens 2 Gew.-% begrenzt. Bevorzugt ist ein Gehalt von 1,1 Gew.-% bis zu 2 Gew.-%.

TiO₂, ZrO₂ und optional SnO₂ sind als Keimbildner vorgesehen. Die Komponenten bilden bei der Keimbildung Mischkristalle, auf denen die Hochquarz-Mischkristalle aufwachsen.

Der ZrO₂-Gehalt ist vorzugsweise auf weniger als 2 Gew.-% begrenzt, da höhere Gehalte das Einschmelzverhalten des Gemenges bei der Glasherstellung verschlechtern und die Entglasungsstabilität bei der Formgebung durch Bildung von Zr-haltigen Kristallen beeinträchtigt werden kann. Der Mindestgehalt beträgt 1,6 Gew.-%, um eine ausreichend schnelle Keimbildung sicherzustellen.

Die Komponente TiO₂ ist ein sehr wirksamer und für kurze Keramisierungszeiten wichtiger Bestandteil. Der TiO₂-Gehalt soll mindestens 2 Gew.-% betragen. Höhere Gehalte als 2,4 Gew.-% sind in transparenten Glaskeramiken mit Hochquarz-Mischkristall als Hauptkristallphase wegen der Bildung von Fe/Ti- und Sn/Ti-Farbkomplexen für die Farbe c* nachteilig.

Die Komponente SnO₂ ist wegen der Entglasungsfestigkeit auf Werte von höchstens 0,4 Gew.-%, bevorzugt höchstens 0,3 Gew.-% und besonders bevorzugt maximal 0,2 Gew.-% begrenzt. Höhere Gehalte führen zur Kristallisation von Sn-haltigen Kristallphasen an den Kontaktmaterialien (z.B. Pt/Rh) bei der Formgebung und sind zu vermeiden. Wegen der Bildung von Sn/Ti- Farbkomplexen ist der Gehalt an SnO₂ möglichst gering zu wählen, und die mindestens benötigte Menge wird durch die Forderung nach ausreichender Läuterwirkung beziehungsweise Keimbildung bestimmt.

Zur Verbesserung der Schmelzbarkeit und Entglasungsfestigkeit können bis zu 1 Gew.-% B₂O₃ und 3 Gew.-% P₂O₅ enthalten sein. Höhere Gehalte sind nachteilig für die chemische Beständigkeit und erhöhen die thermische Ausdehnung. Die Komponente B₂O₃ ist nachteilig für die Zeit-/Temperaturbelastbarkeit der Glaskeramik und wird bevorzugt auf maximal 0,5 Gew.-% begrenzt.

Die Ausgangsgläser für die erfindungsgemäßen Glaskeramiken aus dem Li₂O-Al₂O₃-SiO₂-System können die üblichen chemischen Läutermittel wie Arsen-, Antimon- und/oder Ceroxid enthalten. Auch das Läutermittel SnO₂ kann alternativ oder in Kombination mit Arsen-, Antimon- und/oder Ceroxid in Mengen von bis zu 0,4 Gew.-% SnO₂ zugesetzt werden. Andere Läuterzusätze wie z.B. Manganoxid, Sulfat-, Chlorid-, Fluoridverbindungen können der Glasschmelze zugesetzt werden. Der Gesamtgehalt der Läutermittel und -zusätze soll 2,4 Gew.-%, bevorzugt 2 Gew.-% nicht übersteigen.

Der Wassergehalt der erfindungsgemäßen Glaskeramiken liegt, abhängig von der Wahl der Gemengerohstoffe und den Prozessbedingungen bei der Schmelze, vorzugsweise zwischen 0,015 mol/l und 0,06 mol/l. Dies entspricht β_{OH}-Werten von 0,16 mm⁻¹ bis 0,64 mm⁻¹, gemessen an den kristallisierbaren Ausgangsgläsern.

In einer weiteren bevorzugten Ausführungsform ist die erfindungsgemäße Glaskeramik gekennzeichnet durch eine Zusammensetzung, die im Wesentlichen besteht aus (in Gew.-% auf Oxidbasis):

| | |
|---|---|
| Li₂O | > 4,0 - 4,5 |
| Na₂O+K₂O | 0,05 - 0,3 |
| MgO | 0,2 - 0,8 |
| CaO+SrO | 0,1 - 0,8 |
| BaO | 0 - 0,3 |
| ZnO | 1,1 - 2,0 |
| Al₂O₃ | 19 - 23 |
| SiO₂ | 66 - 69 |
| TiO₂ | 2,0 - 2,4 |
| ZrO₂ | 1,6 - < 2,0 |
| SnO₂ | 0 - 0,2 |
| P₂O₅ | 0 - 1,5 |
| B₂O₃ | 0 - 0,5 |
| As₂O₃ | 0 - 1,0 |

sowie gegebenenfalls Läuterzusätzen wie Manganoxid, Sulfat-, Chlorid-, Fluoridverbindungen in Gesamtgehalten bis zu 1,0 Gew.-%.

Unter "besteht im Wesentlichen aus ..." wird verstanden, dass diese Komponenten zu mindestens 98 Gew.-% in der Glaskeramik enthalten sind.

Auf die Verwendung von Cer- und Antimonoxid wird bevorzugt verzichtet, da diese in transparenten Glaskeramiken eine zusätzliche Färbung bewirken.

Um die für die wirtschaftliche Fertigung und die Anwendungen maßgeblichen Eigenschaften weiter zu verbessern, besitzt die Glaskeramik eine besonders bevorzugte Zusammensetzung (in Gew.-% auf Oxidbasis):

| | |
|---|---|
| Li₂O | > 4,0 - 4,3 |
| Na₂O | 0,05 - 0,25 |
| K₂O | 0 - 0,15 |
| mit Na₂O+K₂O | 0,05 - 0,25 |
| MgO | 0,3 - 0,8 |
| CaO+SrO | 0,3 - 0,8 |
| BaO | 0 - 0,2 |
| ZnO | 1,3 - 1,9 |
| Al₂O₃ | 19 - 23 |
| SiO₂ | 66 - 69 |
| TiO₂ | 2,1 - 2,4 |
| ZrO₂ | 1,6 - 1,9 |
| SnO₂ | 0 - < 0,15 |
| P₂O₅ | < 0,1 |
| B₂O₃ | 0 - < 0,1 |
| As₂O₃ | 0 - 0,9. |

Die erfindungsgemäßen Zusammensetzungen können in zwei verschiedenen Ausführungsformen geläutert werden.

Wenn es auf eine hohe optische Qualität, das heißt hohe Lichttransmission und geringe Farbe, der transparenten Glaskeramik mit Hochquarz-Mischkristall als Hauptkristallphase ankommt, wird vorzugsweise As₂O₃ als Läutermittel eingesetzt. Die Gehalte betragen dann 0,1 Gew.-% bis 1 Gew.-% und bevorzugt 0,2 Gew.-% bis 0,9 Gew.-%.

Gemäß einer zweiten Ausführungsform besitzt die LAS-Glaskeramik eine umweltfreundliche Zusammensetzung. Darunter wird verstanden, dass die Glaskeramik bis auf unvermeidliche Rohstoffverunreinigungen technisch frei ist von Arsen- und Antimonoxid als übliche Läutermittel. Als Verunreinigung liegen diese Komponenten in Gehalten von weniger als 1000 ppm, bevorzugt weniger als 400 ppm vor.

Bei dieser Ausführungsform wird durch Zusatz von SnO₂ in Gehalten von 0,05 Gew.-% bis 0,4 Gew.-% geläutert. Bevorzugt beträgt die Obergrenze 0,3 Gew.-% und besonders bevorzugt bis zu 0,2 Gew.-%.

Für die Verringerung der Farbe ist es vorteilhaft, möglichst geringe Mengen des Läutermittels SnO₂ einzusetzen.

In dieser bevorzugten Ausführungsform ist die erfindungsgemäße Glaskeramik vorzugsweise gekennzeichnet durch eine Zusammensetzung, die im Wesentlichen besteht aus (in Gew.-% auf Oxidbasis):

| | |
|---|---|
| Li₂O | > 4,0 - 4,5 |
| Na₂O+K₂O | 0,05 - 0,3 |
| MgO | 0,2 - 0,8 |
| CaO+SrO | 0,1 - 0,8 |
| BaO | 0 - 0,3 |
| ZnO | 1,1 - 2,0 |
| Al₂O₃ | 19 - 23 |
| SiO₂ | 66 - 69 |
| TiO₂ | 2,0 - 2,4 |
| ZrO₂ | 1,6 - < 2,0 |
| SnO₂ | 0,05 - 0,4 |
| P₂O₅ | 0 - 3 |
| B₂O₃ | 0 - 0,5 |

sowie gegebenenfalls Läuterzusätzen wie Ceroxid, Manganoxid, Sulfat-, Chlorid, Fluoridverbindungen in Gesamtgehalten bis zu 1,0 Gew.-%.

Unter "besteht im Wesentlichen aus ..." wird verstanden, dass diese Komponenten zu mindestens 98 Gew.-% in der Glaskeramik enthalten sind.

Um eine ausreichende Läuterwirkung bei den geforderten Blasenqualitäten und Wannendurchsätzen zu erreichen, ist es vorteilhaft, eine Hochtemperaturläuterung oberhalb 1700 °C, bevorzugt oberhalb 1750°C durchzuführen. Es wird die geforderte Blasenqualität von weniger als 2 Blasen/kg im Glas bzw. in der Glaskeramik (gemessen ab Blasengrößen größer als 0,1 mm in einer Dimension) erreicht.

Die Alkalioxide Na₂O und K₂O verbessern die Schmelzbarkeit und die Entglasungsfestigkeit bei der Formgebung des Glases. Die Gehalte müssen jedoch begrenzt werden, weil diese Komponenten nicht in die Kristallphase eingebaut werden, sondern in der Restglasphase der Glaskeramik verbleiben. Die Summe dieser Alkalien beträgt daher vorzugsweise weniger als 0,2 Gew.-%.

Der MgO-Gehalt beträgt bevorzugt wenigstens 0,4 Gew.-% und ist besonders bevorzugt größer als 0,4 Gew.-% und beträgt bis zu 0,8 Gew.-%, weil sich damit gute Schmelzbarkeit und die Einstellbarkeit eines niedrigen thermischen Ausdehnungskoeffizienten kombinieren lassen.

Bevorzugt enthält die Glaskeramik weniger als 0,1 Gew.-% BaO und besonders bevorzugt ist sie technisch frei bis auf unvermeidliche Spuren von üblicherweise weniger als 500 ppm.

Die Alkalioxide Na₂O und K₂O sowie die Erdalkalioxide CaO, SrO und BaO können nicht in die Hochquarz- und Keatit-Mischkristallphase eingebaut werden und verbleiben in der Restglasphase. Sie sind für wirtschaftliche Fertigungsbedingungen wie Schmelzbarkeit und Entglasungsfestigkeit maßgeblich. Für die mechanischen und thermischen Eigenschaften sowie geringe Dichte sind die Komponenten CaO und SrO vorteilhafter. Sie begünstigen die Ausbildung einer hohen Kristallinität und erlauben es niedrigere thermische Ausdehnungskoeffizienten der Glaskeramiken zu erreichen.

Es ist deshalb von Vorteil, wenn das Verhältnis der Summengehalte in Gew.-% von CaO + SrO zu dem von Na₂O + K₂O + BaO größer ist als 1, und bevorzugt, wenn dieses Verhältnis der Summengehalte der Komponenten zueinander größer ist als 2.

Der CaO-Gehalt beträgt bevorzugt 0,2 Gew.-% bis 0,6 Gew.-%. Die Zusätze sind günstig für die Schmelzbarkeit und die Entglasungsfestigkeit und für geringe Dichte.

Der SrO-Gehalt liegt bevorzugt bei 0,05 Gew.-% bis 0,3 Gew.-%. Da dieses Element bei vergleichbarer Wirkung wie CaO die Dichte der Glaskeramik stärker erhöht, ist der Gehalt an SrO in Gew.-% bevorzugt niedriger gewählt als der von CaO in Gew.-%, so dass dann SrO/CaO < 1 gilt.

Die Alkalioxide Na₂O, K₂O und die Erdalkalioxide CaO, SrO, BaO reichern sich außer in der Restglasphase zwischen den Kristallen auch an der Oberfläche der Glaskeramik an. Beim Keramisieren bildet sich eine ca. 100 nm bis 800 nm dicke glasige Oberflächenschicht, die nahezu frei ist von Kristallen und die mit diesen Elementen angereichert ist, wobei Li₂O abgereichert ist. Diese glasige Oberflächenschicht wirkt sich günstig auf die chemische Beständigkeit der Glaskeramik aus. Aus diesem Grund soll der Gesamtgehalt der Komponenten Na₂O, K₂O, CaO, SrO und BaO vorzugsweise zwischen 0,5 Gew.-% und 0,9 Gew.-% liegen. Höhere Gesamtgehalte sind nachteilig für den geringen Restglasphasenanteil.

Wegen der hohen Kosten eisenarmer Gemengerohstoffe ist es unwirtschaftlich, den Fe₂O₃ -Gehalt der Glaskeramik auf Werte von 0,008 Gew.-% (80 ppm) und darunter zu begrenzen. Da auch beim Recycling von Scherben ein Eintrag von Eisen über die Zerkleinerung stattfindet, ist ein Fe₂O₃-Gehalt von größer als 0,011 Gew.-% wirtschaftlich vorteilhaft. Andererseits erhöht sich mit dem Fe₂O₃-Gehalt der transparenten Glaskeramik auch die Konzentration der Fe/Ti-Farbkomplexe. Die Färbung (Buntheit c*) wird erhöht, und durch Absorption wird die Lichttransmission Y (brightness) vermindert. Die Glaskeramik soll deswegen höchstens 0,02 Gew.-%, bevorzugt bis zu 0,016 Gew.-% Fe₂O₃ enthalten.

Insbesondere bei den transparenten Ausführungsformen der Glaskeramik können Zusätze von Nd₂O₃ zur Entfärbung von vorhandener Eigenfarbe verwendet werden. Wenn es auf eine besonders hohe Lichttransmission ankommt, wird jedoch auf diesen Zusatz verzichtet.

So kann die Glaskeramik Zusätze von Nd₂O₃ in Gehalten bis zu 0,08 Gew.-% (800 ppm) enthalten. Der Zusatz wirkt als physikalische Entfärbung und verringert die störende auf Fe/Ti- und Sn/Ti-Farbkomplexen beruhende Färbung insbesondere bei der transparenten Glaskeramik.

Bevorzugt beträgt der Nd₂O₃-Gehalt weniger als 50 ppm, und besonders bevorzugt ist die Glaskeramik technisch frei von Zusätzen von Nd₂O₃, um die Absorption durch Nd₂O₃ zu vermeiden und so eine hohe Lichttransmission zu erreichen. Vorzugsweise wird der Verzicht auf Nd₂O₃ mit besonders niedrigen Eisengehalten, nämlich maximal 0,016 Gew.-% Fe₂O₃ kombiniert.

In einer weiteren Ausführungsform ist die Glaskeramik durch Zusatz von Farboxiden wie V₂O₅, CoO, NiO, Fe₂O₃, Cr₂O₃, MnO₂, CeO₂ einzeln oder in Kombination eingefärbt. Dadurch wird der Transmissionsverlauf an die Anforderungen der Anwendung angepasst. Die Mengen betragen bevorzugt einzeln und in Summe weniger als 1 Gew.-%. Zusätze von CoO, Fe₂O₃, NiO sind geeignet, die Infrarottransmission abzusenken.

Bei den zuvor genannten Zusammensetzungsbereichen ist zu berücksichtigen, dass die aufgeführten Komponenten wenigstens 98 Gew.-%, in der Regel mehr als 99 Gew.-% der Gesamtzusammensetzung betragen. Eine Vielzahl von Verbindungen von Elementen wie z. B. F, Cl, B, P, den Alkalien Rb, Cs oder Elementen wie Mn, Hf sind bei den großtechnisch verwendeten Gemengerohstoffen übliche Verunreinigungen. Andere Verbindungen wie z.B. solche der Elemente W, Nb, Y, Mo, Bi, der Seltenen Erden können ebenfalls in geringen Anteilen enthalten sein.

In einer ersten Ausführungsform enthält die hochkristalline Lithiumaluminiumsilikat-Glaskeramik Hochquarz-Mischkristalle als Hauptkristallphase. Bevorzugt ist die mittlere Kristallitgröße weniger als 50 nm, und diese bevorzugte Glaskeramik ist transparent ohne visuell auffällige Streuung.

Die Lichttransmission der transparenten LAS-Glaskeramik gemessen im CIE-Farbsystem als Lichttransmission Y (brightness) beträgt mehr als 82%, bevorzugt mehr als 86% und besonders bevorzugt mindestens 88 %. Die Werte gelten gemessen mit Normlicht C, Beobachterwinkel 2° für eine 4 mm dicke polierte Glaskeramikprobe. Die Farbe c*, gemessen im CIELAB-Farbsystem, liegt unter 9, vorzugsweise bei kleiner als 5, bevorzugt kleiner als 4 und besonders bevorzugt kleiner als 3,5, gemessen bei 4 mm Dicke mit Normlicht C sowie Beobachterwinkel 2°. Die LAS-Glaskeramik ist vorzugsweise ohne visuell störende Lichtstreuung.

Die thermische Ausdehnung, gemessen zwischen 20 °C und 700 °C, ist bei diesem Typ von LAS-Glaskeramik mit Hochquarz-Mischkristallen vorzugsweise auf negative Werte kleiner -0,4 • 10⁻⁶/K, bevorzugt kleiner -0,6 • 10⁻⁶/K eingestellt. Dadurch erschließen sich zusätzliche Anwendungen bei der Athermalisierung optischer Bauteile, ohne dass der Einsatz bei den üblichen Anwendungen gefährdet wird, weil die Abweichung von der Nullausdehnung klein ist.

In einer zweiten Ausführungsform enthält die hochkristalline Lithiumaluminiumsilikat-Glaskeramik Keatit-Mischkristalle als Hauptkristallphase. Aufgrund der größeren mittleren Kristallitgröße größer als 120 nm ist die Glaskeramik transluzent oder opak. Der Gehalt der Restglasphase beträgt bevorzugt weniger als 5 Gew.-%.

Die thermische Ausdehnung, gemessen zwischen 20 °C und 700 °C, ist für diesen Typ von LAS-Glaskeramik mit Keatit-Mischkristallen vorzugsweise auf sehr niedrige Werte von kleiner als 1, bevorzugt auf kleiner als 0,9 • 10⁻⁶/K und besonders bevorzugt kleiner als 0,8 • 10⁻⁶/K eingestellt. Auch im Temperaturbereich um Raumtemperatur lässt sich bei diesem Typ von Glaskeramik eine sehr geringe Ausdehnung einstellen. So beträgt in einer bevorzugten Ausführungsform die thermische Ausdehnung für diesen Typ von LAS-Glaskeramik mit Keatit-Mischkristallen im Bereich von 25 °C bis 50 °C weniger als 0 ± 0,3 • 10⁻⁶/K, bevorzugt weniger als 0 ± 0,15 • 10⁻⁶/K und weiter bevorzugt weniger als 0 ± 0,7 • 10⁻⁶/K.

Die Dichte der erfindungsgemäßen Glaskeramik ist bevorzugt kleiner als 2,54 g/cm³.

Die bevorzugte Geometrie für die erfindungsgemäße hochkristalline Glaskeramik bzw. die daraus hergestellten Artikel ist in Form von Platten. Die Platte weist vorzugsweise eine Dicke von 2 mm bis 20 mm auf, weil sich damit wichtige Anwendungen erschließen. Bei geringeren Dicken wird die Festigkeit beeinträchtigt, höhere Dicken sind aufgrund des höheren Materialbedarfs weniger wirtschaftlich. Bis auf die Anwendung als Sicherheitsglas, bei der es auf hohe Festigkeiten ankommt, wird die Dicke daher in der Regel unter 6 mm gewählt.

Geeignete Formgebungsverfahren für die plattenförmige Geometrie sind insbesondere Walzen und Floaten.

Die Glaskeramikplatte und die vorzugsweise daraus hergestellten Artikel können dabei nicht nur eben ausgeformt sein, sondern auch dreidimensional verformt sein. Beispielsweise abgekantete, gewinkelte oder gewölbte Platten können verwendet werden. Die Platten können rechtwinklig oder in anderen Formen vorliegen sowie neben ebenen Bereichen dreidimensional verformte Bereiche wie z.B. Woks oder eingewalzte Stege oder Flächen als Erhebungen bzw. Vertiefungen enthalten. Die geometrischen Verformungen der Platten werden bei der Heißformgebung, z. B. durch strukturierte Formgebungswalzen, oder durch nachgelagerte Heißformgebung an den Ausgangsgläsern, zum Beispiel durch Brenner oder durch Schwerkraftsenken, vorgenommen. Beim Keramisieren wird mit unterstützenden keramischen Formen gearbeitet, um unkontrollierte Änderungen der geometrischen Form zu vermeiden.

Durch die mit der hohen Kristallinität, der niedrigen thermischen Ausdehnung und dem optimierten Gefüge aus Restglasphase und Kristallitphase verbundenen günstigen mechanischen, optischen und thermischen Eigenschaften werden viele Anwendungen vorteilhaft bedient.

Die erfindungsgemäßen, optional eingefärbten, transparenten, transluzenten oder opaken Glaskeramikartikel mit Hochquarz- oder Keatit-Mischkristallen als Hauptkristallphase finden Anwendung als Brandschutzglas, Kaminsichtscheibe, Backofensichtscheibe (insbesondere für Pyrolyseherde), Kochfläche ggf. mit Unterseitenbeschichtung, Abdeckung im Beleuchtungssektor und als Sicherheitsglas optional im Laminatverbund, als Trägerplatte oder Ofenauskleidung. In der Keramik-, Solar- oder Pharmaindustrie oder der Medizintechnik eignen sie sich insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung. Weiter finden sie Verwendung als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch- oder Bratfläche, als weiße Ware, als Heizkörperabdeckung, als Wafersubstrat, als transluzenter Gegenstand mit UV-Schutz, als Fassadenplatte oder als Konstruktionsbestandteil eines elektronischen Gerätes.

Die transparente Glaskeramikscheibe mit Hochquarz-Mischkristallen als Hauptkristallphase findet ebenfalls Verwendung in einem transparenten Scheibenlaminat für Sicherheitsanwendungen, wie zum Beispiel gegen mechanische (Schlag, Sturm) und ballistische (Munition, Splitter) Einwirkungen. In dem transparenten Scheibenlaminat besteht mindestens eine Scheibe aus der transparenten Glaskeramik. Die anderen Scheiben können aus Kalk-Natron-Glas, Borosilikatglas, Aluminosilikatglas und/oder Kunststoff bestehen. Die Scheiben sind durch im Brechungsindex angepasste Polymerschichten aus Folien oder Gießharzen als Haftvermittler in einem Laminierprozess verbunden. Bevorzugt beträgt die Dicke der Glaskeramikscheiben mehr als 6 mm und besonders bevorzugt mehr als 10 mm. Beispiele für organische Haftvermittler aus der Gruppe der Gieß- oder Reaktionsharze sind solche auf der Basis von Polyurethanen, Polyvinylbutyral, Polyharnstoffe, Epoxide, Polyester, Polybutylenterephthalate, Poly-(methyl-) acrylate, Silikone und Silikonharzpolymere. Aus der Gruppe der thermoplastischen Klebstoffe bestehen Beispiele auf der Basis von Polyethylen oder dessen Copolymere, insbesondere Ethylenvinylacetat, Polyvinylacetat und aus Mischungen hiervon.

Die transluzente oder opake Glaskeramikscheibe mit Keatit-Mischkristallen als Hauptkristallphase findet ebenfalls Verwendung als Präzisionsbauteil bei Raumtemperatur, wie z. B. als Abstandsnormale, Fotomaske, optische Bank oder Wafer Stages, als Spiegelträgermaterial für reflektierende optische Bauteile wie in der Astronomie und in der LCD- oder EUV-Lithografie, oder als Lasergyroskop. Sie hat vorzugsweise einen thermischen Ausdehnungskoeffizienten von 25 °C bis 50 °C von weniger als 0 ± 0,3 • 10⁻⁶/K. Ihr Restglasphasenanteil beträgt vorzugsweise weniger als 5 Gew.-%.

Die vorliegende Erfindung wird anhand der folgenden Beispiele weiter verdeutlicht.

Die Ausgangsgläser wurden aus in der Glasindustrie üblichen Rohstoffen bei Temperaturen von ca. 1620 °C, 4 Stunden eingeschmolzen. Nach dem Einschmelzen des Gemenges in Tiegeln aus gesintertem Kieselglas wurden die Schmelzen in Pt/Rh-Tiegel mit Innentiegel aus Kieselglas umgegossen und bei Temperaturen von 1550 °C, 30 Minuten durch Rühren homogenisiert. Nach dieser Homogenisierung wurden die Gläser für 2 Stunden bei 1640 °C geläutert. Anschließend wurden Stücke von ca. 140x140x30 mm³ Größe gegossen und in einem Kühlofen, beginnend ab 660 °C auf Raumtemperatur abgekühlt. Die Gussstücke wurden in die für die Untersuchungen und für die Keramisierung benötigten Größen unterteilt.

Für einige Ausführungsbeispiele sind in Tabelle 1 Zusammensetzungen und Eigenschaften der kristallisierbaren Ausgangsgläser für die hochkristallinen Glaskeramiken aufgeführt. Dabei handelt es sich bei den Gläsern 1 bis 9 um erfindungsgemäße Gläser und bei dem Glas 10 um ein Vergleichsglas mit einer Zusammensetzung außerhalb der vorliegenden Erfindung.

Aufgrund von typischen Verunreinigungen in den verwendeten großtechnischen Gemengerohstoffen addieren sich die Zusammensetzungen nicht genau zu 100 Gew.-%. Typische Verunreinigungen, auch wenn nicht absichtlich in die Zusammensetzung eingeführt sind F, Cl, B, P, Mn, Rb, Cs, Hf die üblicherweise weniger als 0,1 Gew.-% betragen. Sie werden oft über die Rohstoffe für die verwandten Komponenten eingeschleppt, so z.B. Rb und Cs über die Na-, bzw. K- Rohstoffe, oder Hf über den Zr-Rohstoff.

Der mit IR-Spektroskopie gemessene Wassergehalt ausgewählter Ausgangsgläser ist in Tabelle 1 angegeben.

In Tabelle 1 sind für die meisten der Gläser auch Eigenschaften im glasigen Zustand, nämlich die Transformationstemperatur Tg, die Verarbeitungstemperatur V_{A}, Schmelztemperatur ("10²-Temperatur") und Dichte aufgeführt.

Die Tabelle 2 zeigt die Keramisierungsbedingungen und Eigenschaften der mit dem Keramisierungsprogramm 1 aus den Gläsern 1 bis 10 hergestellten Glaskeramiken, und Tabelle 3 zeigt die mit dem Keramisierungsprogramm 2 aus denselben Gläsern hergestellten Glaskeramiken.

In Tabelle 2 sind die Variablen bei der Keramisierung T_{KB} und Tₘₐₓ sowie Eigenschaften der Glaskeramik aufgeführt, nämlich Transmissionswerte, thermische Ausdehnung zwischen 20 °C und 300 °C sowie zwischen 20 °C und 700°C, Dichte und die mittels Röntgenbeugung gemessenen Phasengehalte sowie die mittlere Kristallitgröße. Für ausgewählte Glaskeramiken wurde auch der E-Modul bestimmt. Die Transmissionsmessungen wurden an polierten Platten der Dicke 4 mm mit Normlicht C, 2° durchgeführt. Bei den Messungen an den transparenten Glaskeramiken sind die Transmissionswerte bei ausgewählten Wellenlängen sowie die Lichttransmission angegeben. Die Bezeichnungen Lichttransmission und Helligkeit (brightness) Y entsprechen dergleichen Messgröße, gemessen nach DIN 5033 im CIE Farbsystem. Der Ra-Wert (allgemeiner Farbwiedergabeindex) ist nach DIN EN 410 bestimmt. Es sind auch für Messung in Durchlicht die Farbkoordinaten L* und die Größe c* als Maß für die Farbe aus dem CIELAB-Farbsystem angegeben.

Bei dem Keramisierungsprogramm 1 wird bis zu einer Temperatur von 600 °C im Keramisierungsofen in 20 min aufgeheizt. Der Temperaturbereich von 680 °C bis 800 °C ist für die Keimbildung wichtig. Die Temperaturführung wird in diesem Bereich so an die jeweilige Zusammensetzung angepasst, dass eine Lichtstreuung durch zu große Kristallite vermieden wird. Oberhalb von ca. 800 °C erfolgt die Kristallisation der gewünschten Hochquarz-Mischkristallphase. Bei der Maximaltemperatur Tₘₐₓ wird die Zusammensetzung von Kristallen und Restglas eingestellt und die Mikrostruktur homogenisiert. Damit werden die chemischen und physikalischen Eigenschaften eingestellt. Beim Keramisierungsprogramm 1 wird im Bereich der Keimbildung bei der Temperatur T_{KB,} der Keimbildungstemperatur, eine Haltezeit t_{KB} eingeführt. Die maximale Temperatur Tₘₐₓ wird individuell an die Zusammensetzung angepasst. Die Werte Tₘₐₓ und T_{KB} sind in der Tabelle 2 angegeben. Auch sind in der Tabelle 2 Eigenschaften der Glaskeramiken aufgeführt, nämlich die Transmission bei 400 nm, die Infrarottransmission bei 1600 nm, die Lichtransmission Y, die Farbkoordinate L* im CIELAB-System und die Größe c* als Maß für die Farbe. die thermische Ausdehnung und die Dichte. Mittels Röntgenbeugung wurden die ebenfalls in Tabelle 2 angegebenen Kristallitgrößen und Phasengehalte, und zwar der Restglasphasengehalt und der Hochquarz-Mischkristall-Phasengehalt bestimmt. Die Dichteänderung der Glaskeramiken bei thermischer Nachbehandlung (compaction) wird als Längenänderung an 100 mm langen Stäben bestimmt. Dabei wurde diese an ausgewählten Beispielen als Differenz der Länge von Ausgangszustand und nach Temperung 700 °C, 15 h bestimmt. Es wird in der Regel eine Kontraktion beobachtet.
Keramisierungsprogramm 1:
   a) schnelles Aufheizen Raumtemperatur auf 600 °C in 20 min,
   b) Temperaturerhöhung von 600 °C auf Keimbildungstemperatur T_{KB} mit einer Heizrate von 5 K/min, Haltezeit t_{KB} von 30 min bei T_{KB,}
   c) Temperaturerhöhung von T_{KB} auf Maximaltemperatur Tₘₐₓ mit einer Heizrate von 2,5 K/min, Haltezeit tₘₐₓ von 10 min bei Tₘₐₓ,
   d) Abkühlen auf 700 °C mit 6 K/min, dann schnelle Abkühlung auf Raumtemperatur.

   Mit dem Keramisierungsprogramm 2 werden die erfindungsgemäßen Glaskeramiken mit Keatit-Mischkristall als Hauptkristallphase hergestellt. Das Programm lehnt sich an das Keramisierungsprogramm 1 an. Die Haltezeit t_{KB} bei der Keimbildung in Programmschritt b) wird variiert, zum Teil wird ohne Haltezeit gearbeitet. In Programmschritt c) werden fallweise höhere Heizraten eingesetzt und die Maximaltemperatur Tₘₐₓ und die Haltezeit tₘₐₓ sind angepasst (s. Tabelle 3). Insbesondere ist die Maximaltemperatur erhöht.
Keramisierungsprogramm 2:
   a) schnelles Aufheizen Raumtemperatur auf 600 °C in 20 min,
   b) Temperaturerhöhung von 600 °C auf Keimbildungstemperatur T_{KB} mit einer Heizrate von 5 K/min, Haltezeit t_{KB} bei T_{KB,}
   c) Temperaturerhöhung von T_{KB} auf Maximaltemperatur Tₘₐₓ mit einer Heizrate von 2 bis 30 K/min, Haltezeit tₘₐₓ,
   d) Abkühlen auf 700 °C mit 6 K/min, dann schnelle Abkühlung auf Raumtemperatur.

Für das Keramisierungsprogramm 2 sind in Tabelle 3 die Variablen für die Keimbildung T_{KB,} t_{KB}, die Heizrate (von T_{KB} auf Tₘₐₓ), Tₘₐₓ und tₘₐₓ sowie Eigenschaften der Glaskeramiken aufgeführt, nämlich die Infrarottransmission bei 1600 nm, die Lichtransmission Y, die thermische Ausdehnung und die Dichte. Für Messung in Auflicht (Remission) sind die Farbkoordinaten L*, a*, b* im CIELAB-System und die Größe c* als Maß für die Farbe angegeben. Mittels Röntgenbeugung wurden die Kristallitgrößen, die in der Tabelle aufgeführt sind, und die Phasengehalte bestimmt. Für die erfindungsgemäßen Glaskeramiken in Tabelle 3 betragen die Gehalte an Restglasphase weniger als 5 Gew, und die Anteile an Keatit-Mischkristallen und Keimbildnerkristallen betragen mehr als 95 Gew.-%.

Das Beispiel 10 in Tabelle 2 ist eine Vergleichsglaskeramik außerhalb der Erfindung, die aus dem aufgeführten kristallisierbaren Vergleichsglas hergestellt wurden. Das Vergleichsbeispiel 10 zeigt den Nachteil hinsichtlich höherer Anteile an Restglasphase und höherer Dichte. Die compaction wurde zu -11 µm / 100 mm bestimmt. Das heisst, dass der 100 mm lange Glaskeramikstab k um 11 µm kontrahiert. Die gemessenen erfindungsgemäßen Beispiele zeigen niedrigere Beträge, nämlich: -8 µm (Beispiel 2), -9 µm (Beispiel 7), -6 µm (Beispiel 9) und -5 µm (Beispiel 8). Insbesondere die Beispiele mit SnO₂-Läuterung ohne As₂O₃ haben vorteilhafte niedrige Beträge.

Bei einigen Glaskeramiken mit Keatit-Mischkristallen als Hauptkristallphase wurde auch die thermische Ausdehnungen im Bereich der Raumtemperatur von 25 °C bis 50 °C gemessen. Diese wurden zu -0,3 • 10⁻⁶/K (Beispiel 16), -0,2 • 10⁻⁶/K (Beispiel 19) und zu -0,1 • 10⁻⁶/K (Beispiel 20) bestimmt.

Die vorteilhaften niedrigen Beträge der compaction-Werte der erfindungsgemäßen Glaskeramiken zeigen sich auch nach Umwandlung in solche mit Keatit-Mischkristallen als Hauptkristallphase. So haben die für die Messung ausgewählten Beispiele Werte von -1 µm (Beispiele 21 und 22), -3 µm (Beispiele 12 und 13). Das Vergleichsglas 10, umgewandelt mit einem Programm wie Beispiel 19, hat eine compaction von -5 µm.

Bei einem zusätzlichen Beispiel Nr. 23 wurde eine Zusammensetzung mit Li₂O 4,09 Gew.-%, Na₂O 0,11 Gew.-%, K₂O 0,06 Gew.-%, MgO 0,63 Gew.-%, CaO 0,44 Gew.-%, SrO 0,10 Gew.-%, BaO 0,05 Gew.-%, ZnO 1,68 Gew.-%, Al₂O₃ 21,0 Gew.-%, SiO₂ 67,3 Gew.-%, TiO₂ 2,23 Gew.-%, ZrO₂ 1,75 Gew.-%, As₂O₃ 0,60 Gew.-% und 29 ppm Nd₂O₃ großtechnisch geschmolzen. Um auf für transparente Glaskeramiken vorteilhafte niedrige Fe₂O₃-Gehalte von gemessen 0,014 Gew.-% zu kommen, wurden vergleichsweise reine technische Gemengerohstoffe, so Lithiumkarbonat, SiO₂-Sand und Aluminiumoxid eingesetzt. Wegen ihres Einflusses auf die Eigenschaften wie zum Beispiel die Transmission wurden für einige Elemente die für diese Rohstoffbasis typischen Verunreinigungsgehalte des geschmolzenen Glases analysiert. Es wurden Gehalte von 0,027 Gew.-% P₂O₅, 0,01 Gew.-% B₂O₃, 50 ppm F, 50 ppm Cl, 10 ppm SnO₂, 3 ppm Cr₂O₃, 2 ppm CuO, 2 ppm V₂O₅, 4 ppm MnO₂, 1 ppm NiO, 1 ppm Sb₂O₃, ≤ 1ppm CoO, ≤ 1ppm MoO₃, analysiert. Die Zusammensetzung ist entsprechend den Anforderungen an die wirtschaftliche Herstellung und hohe Kristallinität der Glaskeramiken optimiert. Der Wassergehalt wurde zu 0,036 mol/l bestimmt. Dies entspricht einem Wassergehalt β_{OH} von 0,38 mm⁻¹ gemessen am kristallisierbaren Glas. Die Glaszusammensetzung des Beispiels Nr. 23 zeichnet sich durch gute Schmelzbarkeit (niedrige 10²- Temperatur von 1757 °C), niedrige Verarbeitungstemperatur V_{A} von 1312 °C und gute Entglasungsfestigkeit aus. Ein Merkmal für die Entglasungsfestigkeit ist die Differenz zwischen Verarbeitungstemperatur V_{A} und Oberer Entglasungsgrenze OEG. Sie beträgt hier 37 K. Die Dichte des kristallisierbaren Glases beträgt 2,438 g/cm³. Die Glasschmelze wurde bei hohen Temperaturen von ca. 1800 °C 15 min geläutert. Die Blasenqualität dieses Glases war hervorragend und betrug < 2 Blasen/kg Glas. Es wurde bei der Formgebung ein beidseitig glattes Glasband von 13 mm Dicke gewalzt und zur Vermeidung von Spannung in einem Kühlofen abgekühlt. Aus diesem Glasband wurden Platten der Größe 500 mm x 500 mm x 13 mm geschnitten und auf keramischen ebenen Unterlagsplatten in einem Rollenofen keramisiert. Das Keramisierungsprogramm 3 wurde bezüglich Ebenheit auf die Geometrie der Platten angepasst. Aufgrund der vergleichsweise hohen Plattendicken und damit verbundenen Temperaturunterschieden in der Platte kann es sonst durch zeitlich unterschiedliche Kristallisationsschrumpfung zu Verzug kommen. Keramisierungsprogramm 3:
a) schnelles Aufheizen von Raumtemperatur auf 650 °C in 6 min,
b) Temperaturerhöhung von 650 °C auf Keimbildungstemperatur 735 °C in 14 min, Haltezeit t_{KB} von 30 min,
c) Temperaturerhöhung von 735 °C auf 790 °C in 75 min,
d) Temperaturerhöhung von 790 °C auf Maximaltemperatur 885 °C in 17 min, Haltezeit tₘₐₓ von 10 min,
e) Abkühlen auf 855 °C mit 2 K/min, dann schnelle Abkühlung auf Raumtemperatur.

Die erhaltenen transparenten Glaskeramikplatten mit Hochquarz-Mischkristallen als vorherrschender Kristallphase verfügten über eine sehr gute Ebenheit von weniger als 0,3 % der Kantenlänge. Zur Bestimmung der Ebenheit wird ein Haarlineal diagonal über die horizontal liegende Platte gelegt, die maximale Höhenabweichung bestimmt und in Bezug zur Kantenlänge gesetzt.

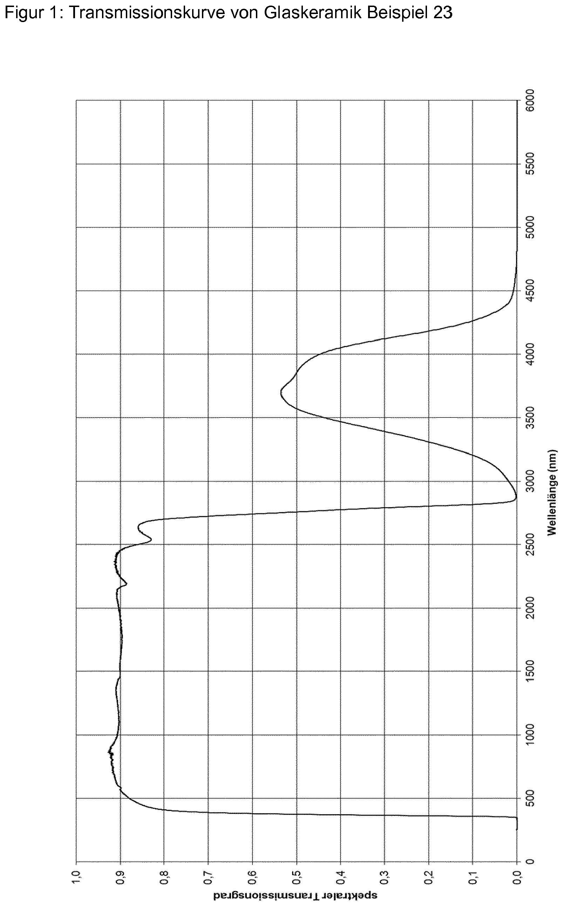

Die Dichte der Glaskeramik betrug 2,527 g/cm³. Die thermische Ausdehnung gemessen zwischen 25 °C und 700 °C wurde zu -0,48•10⁻⁶/K bestimmt und die zwischen Raumtemperatur 25 °C und 300 °C zu -0,80•10⁻⁶/K. Die Transmissionskurve dieser erfindungsgemäßen Glaskeramik ist in der Figur 1 dargestellt. Die Transparenz entspricht den vorteilhaften Werten der Erfindung mit Lichttransmission Y von 89,5 %, Färbung c* von 3,2, L* von 95,8, Transmission von 76,7 % bei 400nm, Transmission von 89,9% bei 1600nm und ohne visuell störende Streuung. Die Messung erfolgte mit Normlicht C an beidseitig polierten 4mm dicken Platten.

Mittels Röntgenbeugung wurde der Phasengehalt an Hochquarz-Mischkristallen zu 83 %, der Anteil an Keimbildnerkristallen zu 3 % und der Anteil an Restglasphase zu 14 % bestimmt. Es wurden keine Keatit-Mischkristalle detektiert, und die mittlere Kristallitgröße betrug 39 nm.

Der E-Modul wurde mit 95 GPa gemessen.

Die Ausgangsgläser der Glaskeramiken besitzen niedrige Schmelz- und Formgebungstemperaturen und sind aus kostengünstigen Gemengerohstoffen herstellbar. Sie zeigen eine hohe Entglasungsfestigkeit.

Sie sind mittels kurzer Keramisierungszeiten in Glaskeramiken herstellbar.

Die Glaskeramiken weisen also wirtschaftliche Fertigungseigenschaften auf.

Die Glaskeramiken genügen den Anforderungen der unterschiedlichen Anwendungen an z. B. chemische Beständigkeit, mechanische Festigkeit, Transmission, Temperaturbelastbarkeit und Langzeitstabilität hinsichtlich Änderungen ihrer Eigenschaften (wie z.B. thermische Ausdehnung, Transmission, Aufbau von Spannungen). Für viele Anwendungen, bei denen es auf geringes Gewicht des Artikels ankommt, ist ihre geringe Dichte vorteilhaft.

Ein besonders vorteilhafter Aspekt der Erfindung ist, dass aus ein und derselben Zusammensetzung des kristallisierbaren Lithiumaluminiumsilikatglases je nach den gewählten Keramisierungsbedingungen eine transparente Glaskeramik mit Hochquarz-Mischkristallen als Hauptkristallphase oder eine transluzente oder opake Glaskeramik mit Keatit-Mischkristallen als Hauptkristallphase hergestellt werden kann.

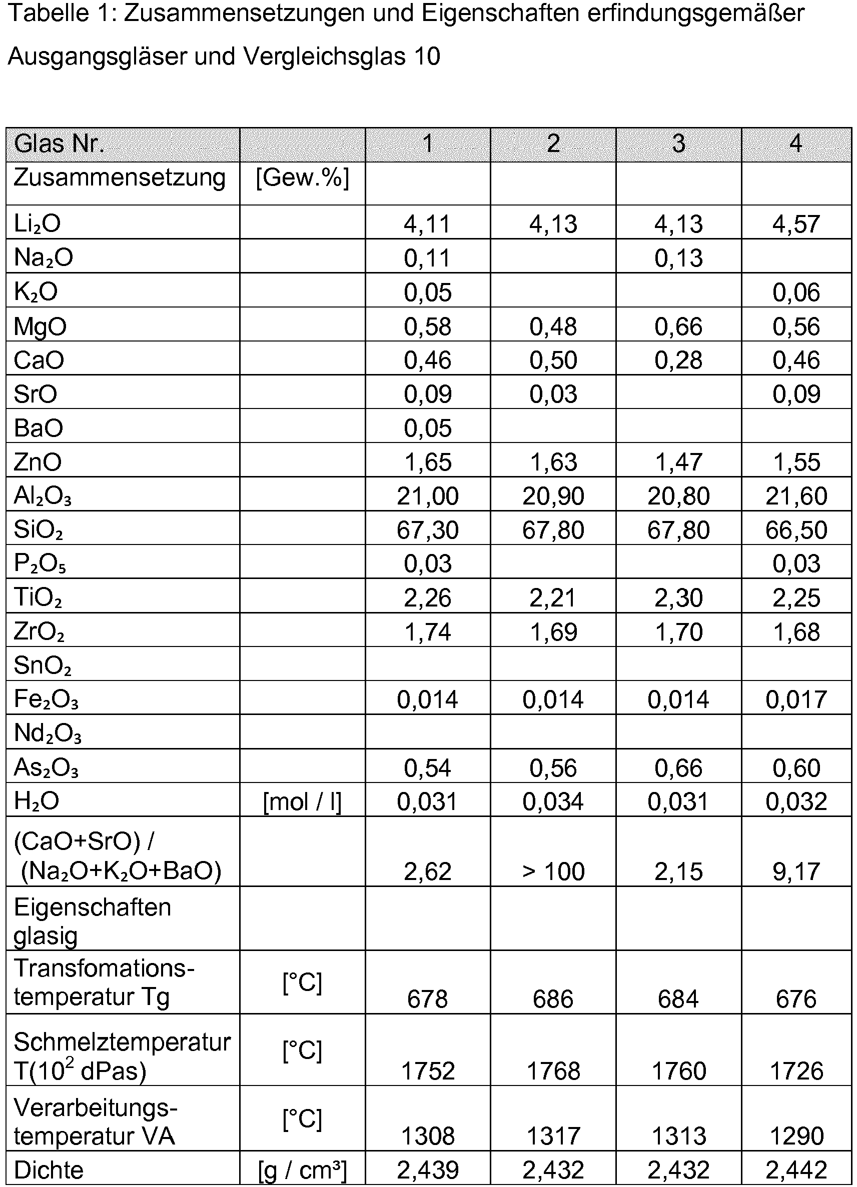

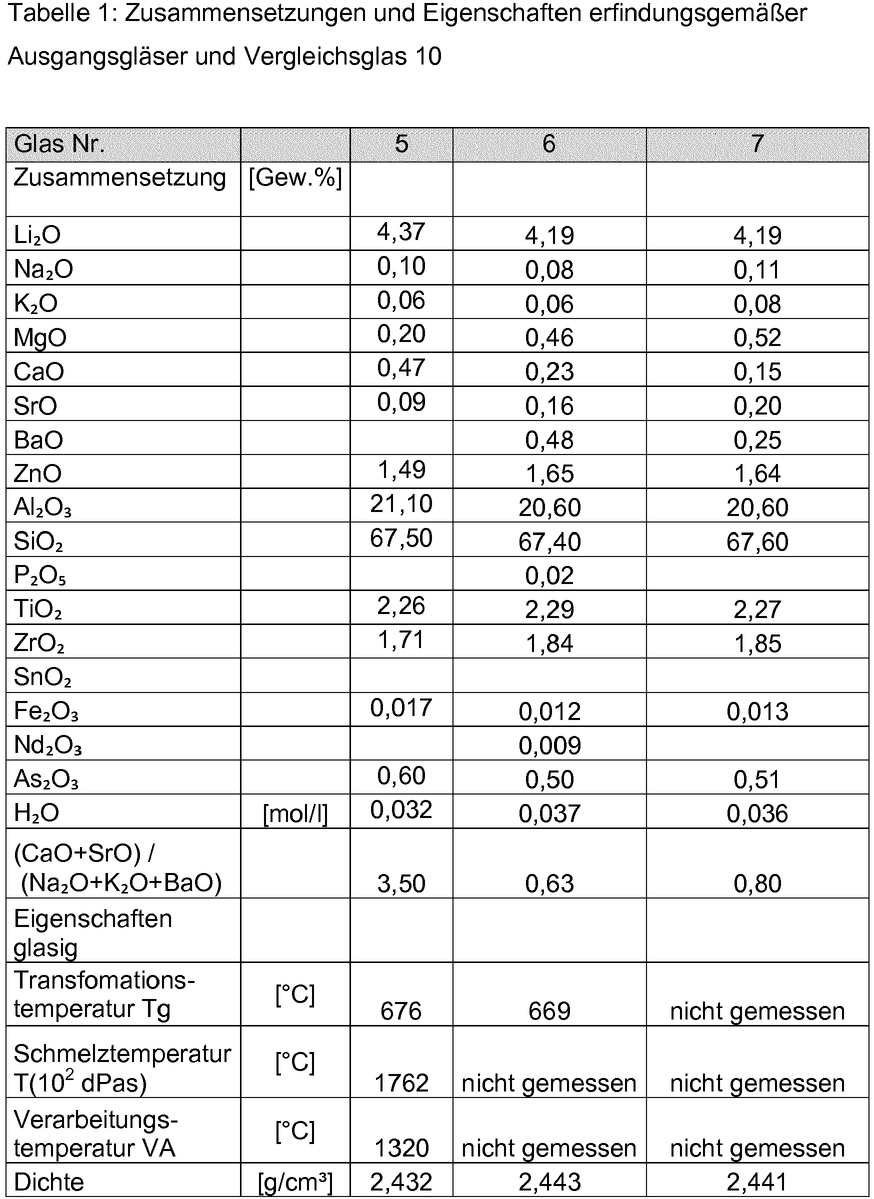

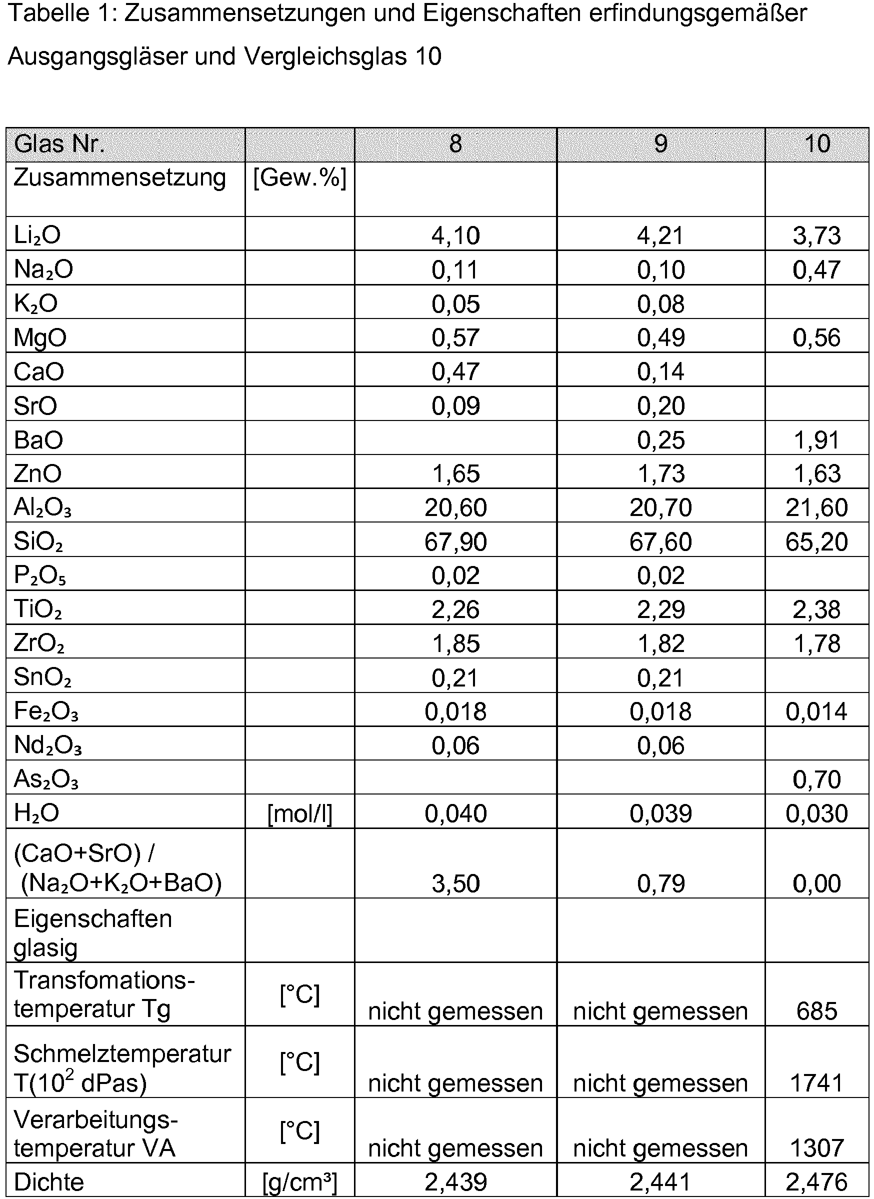

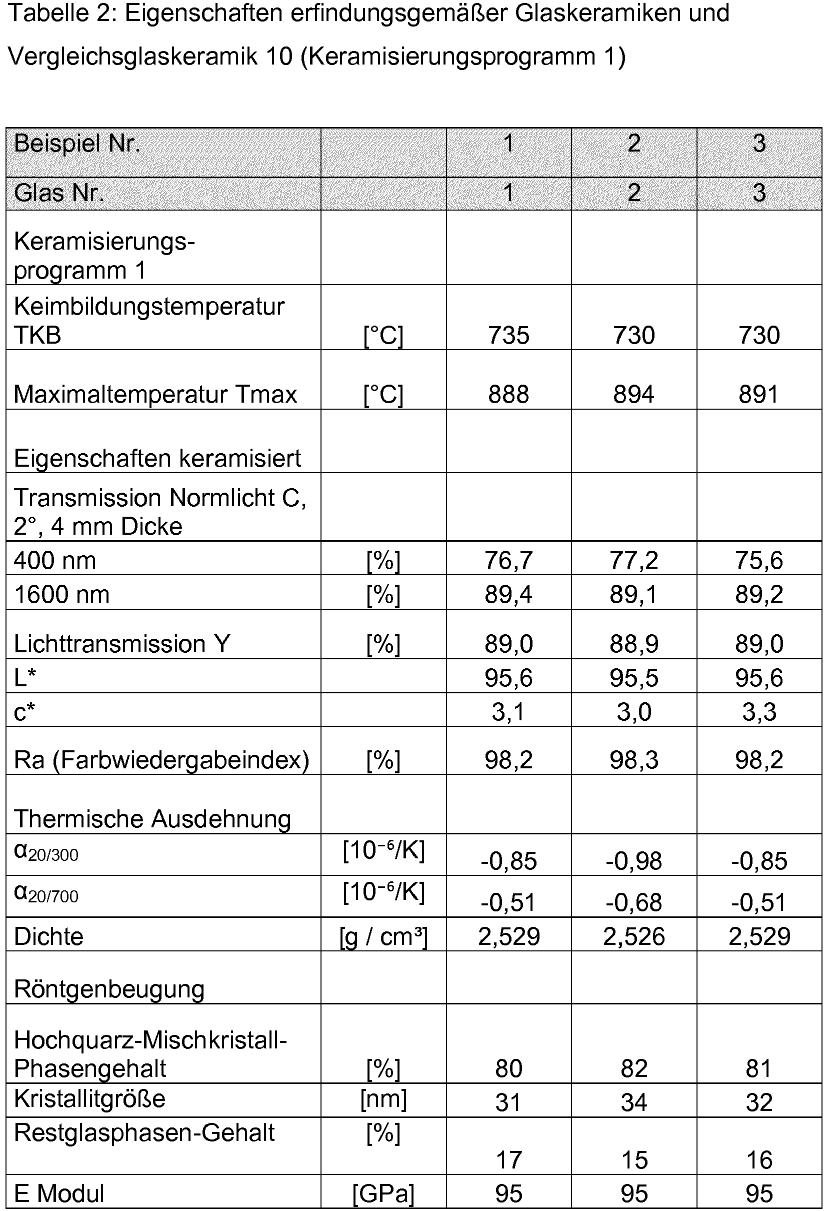

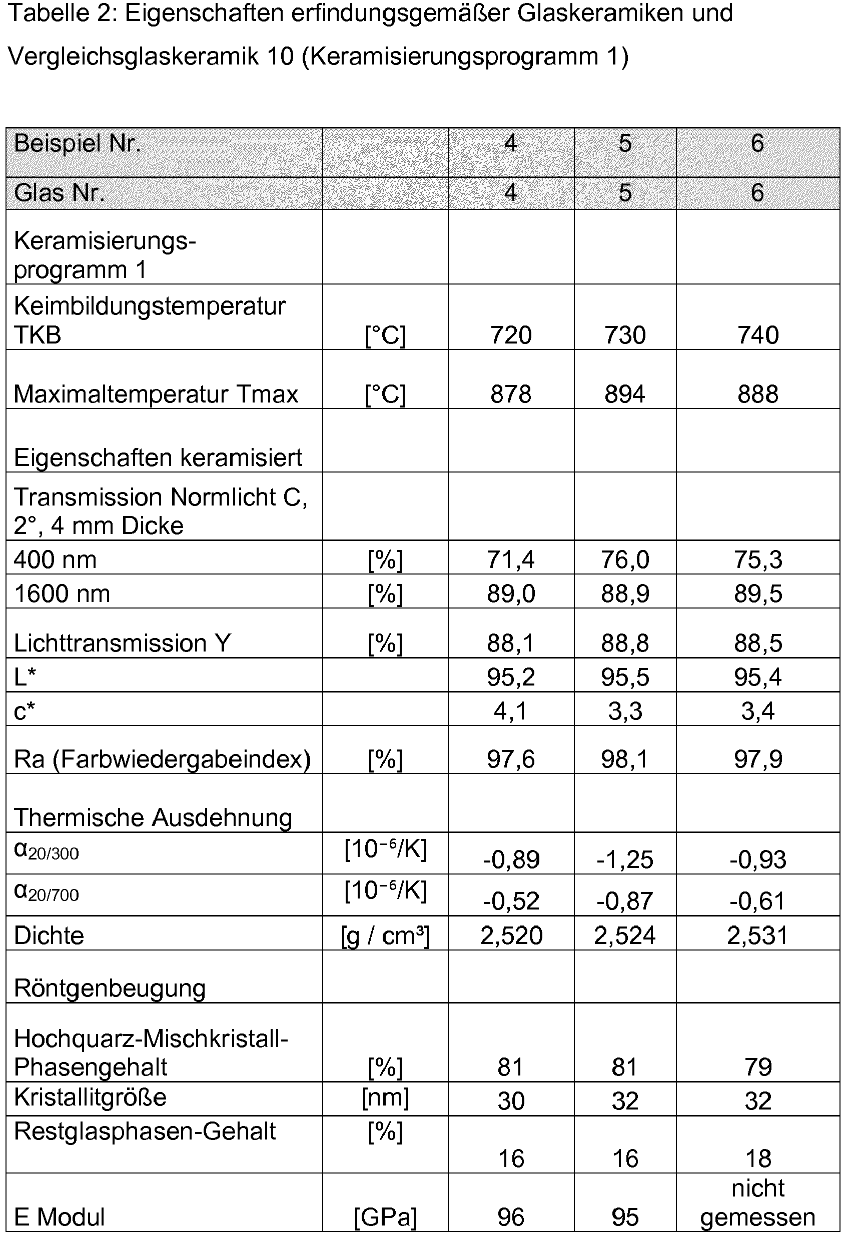

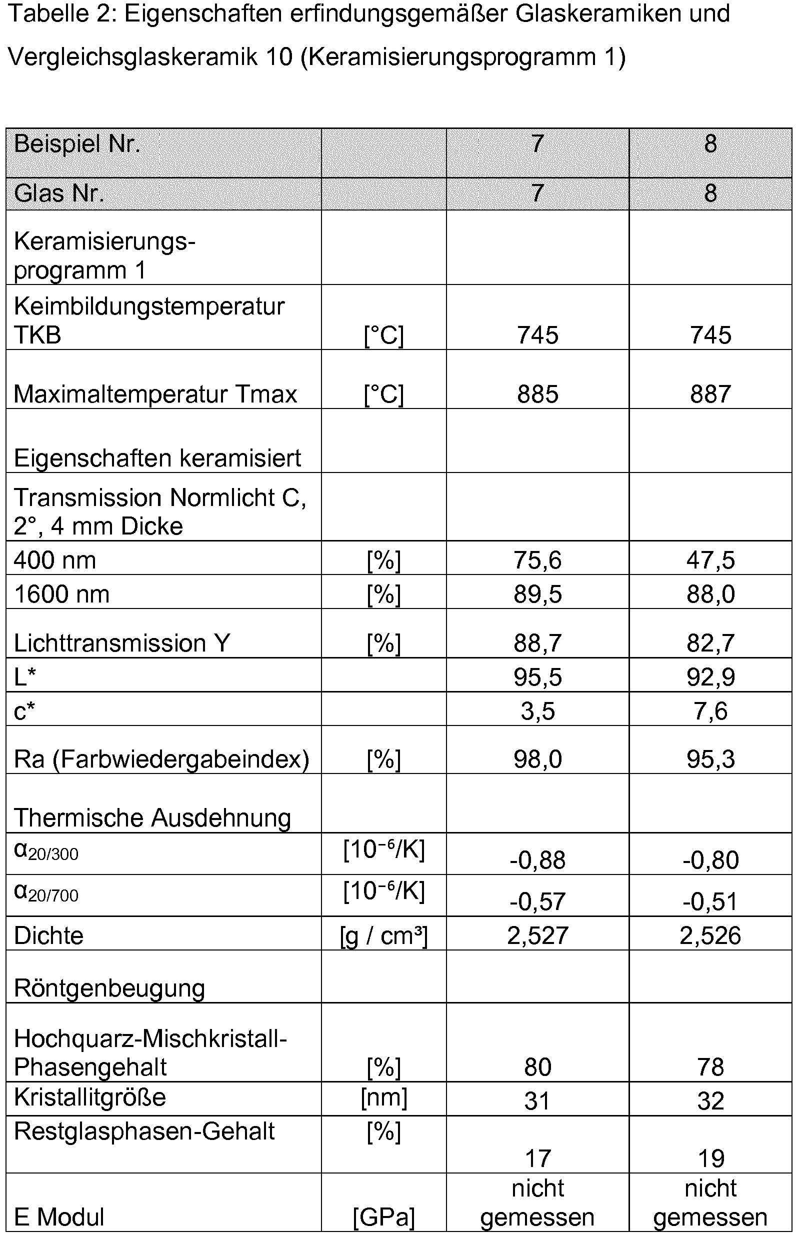

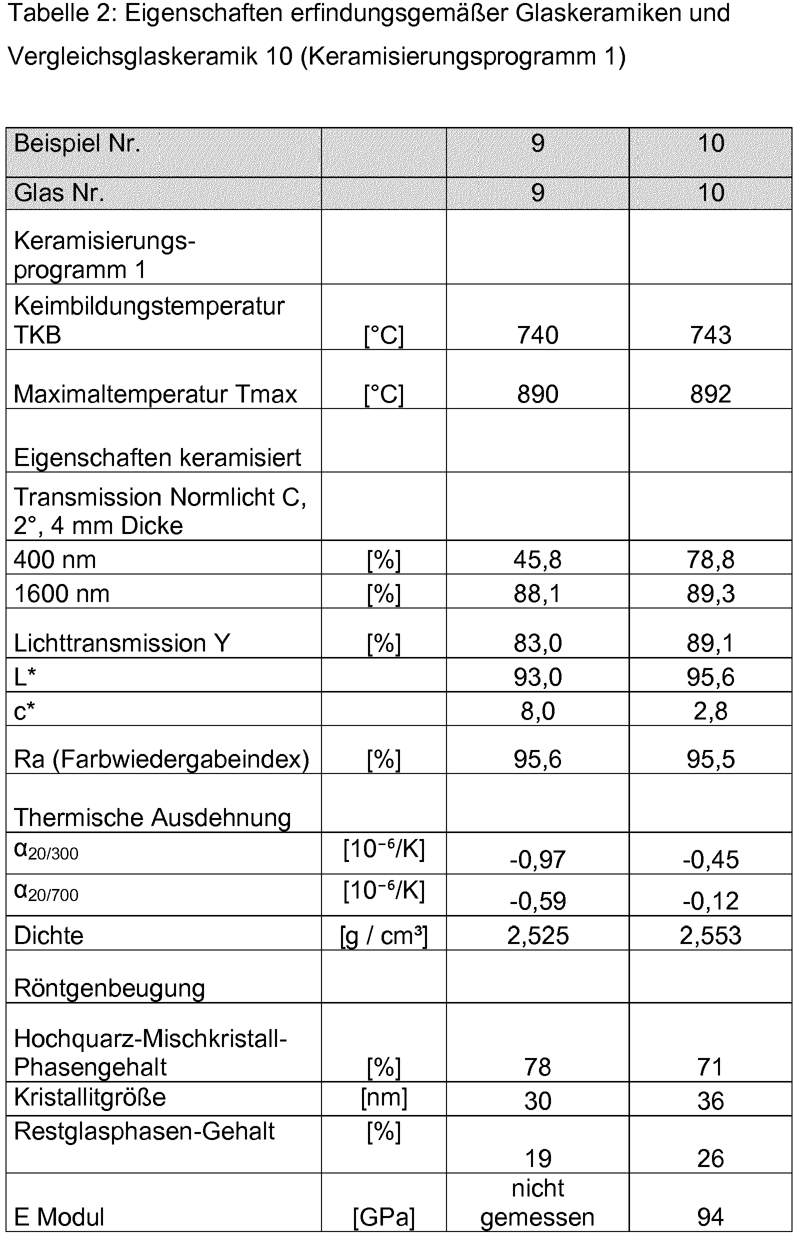

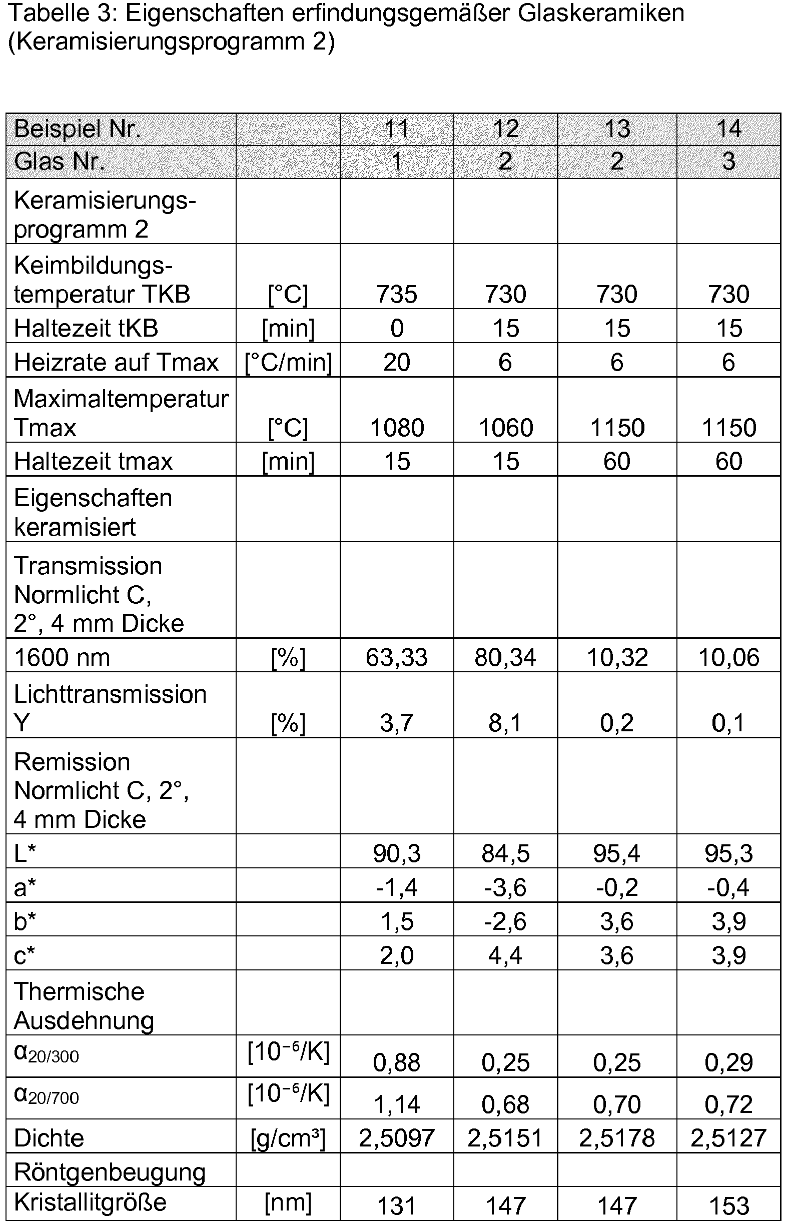

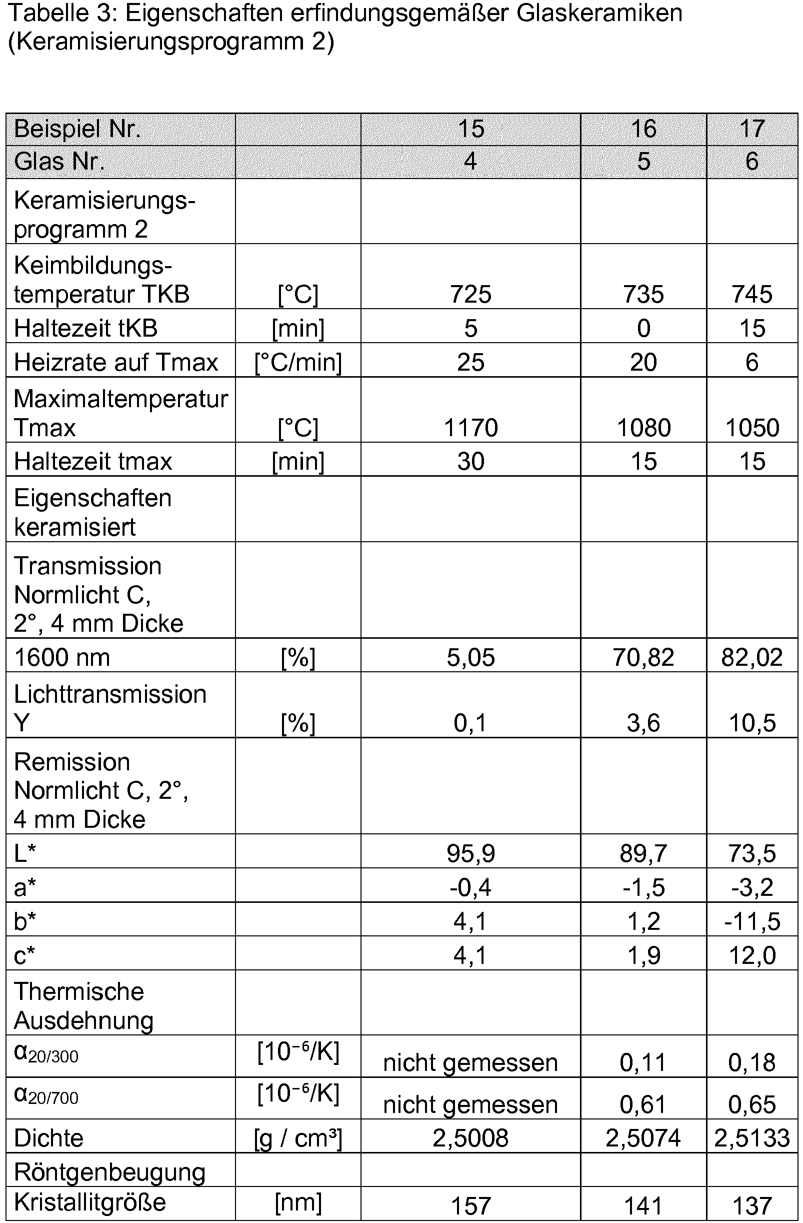

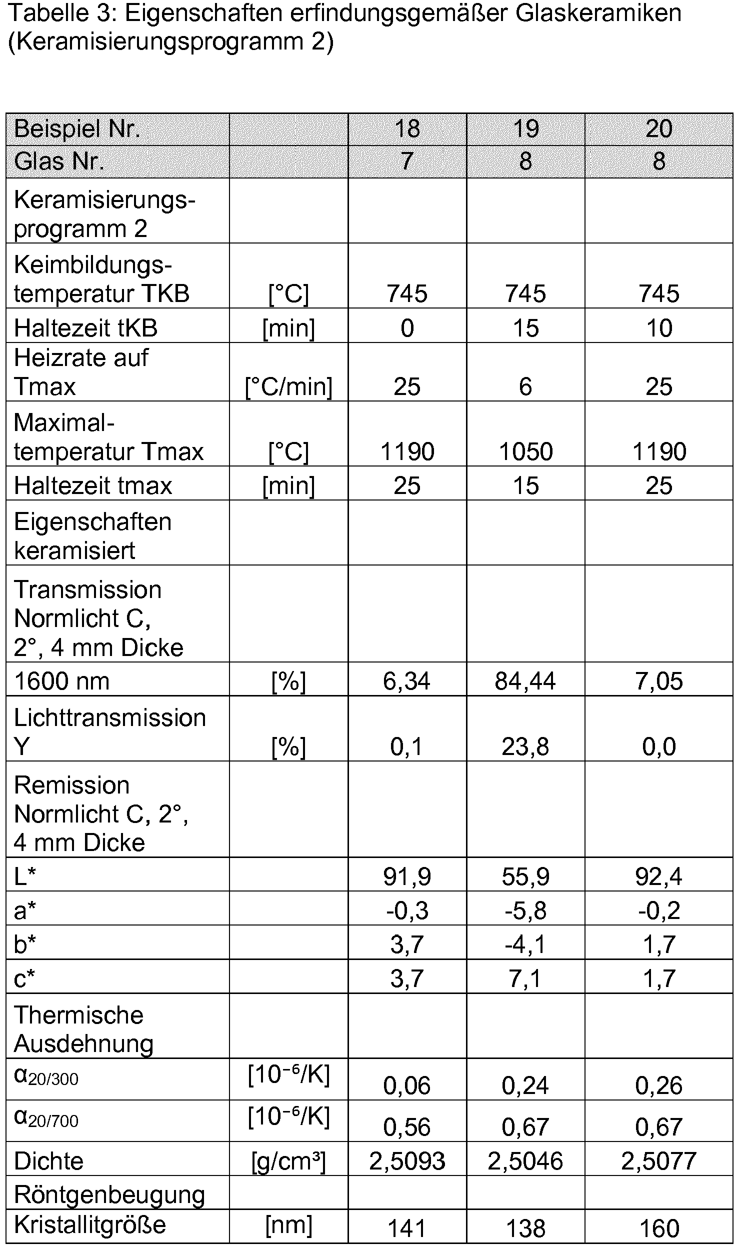

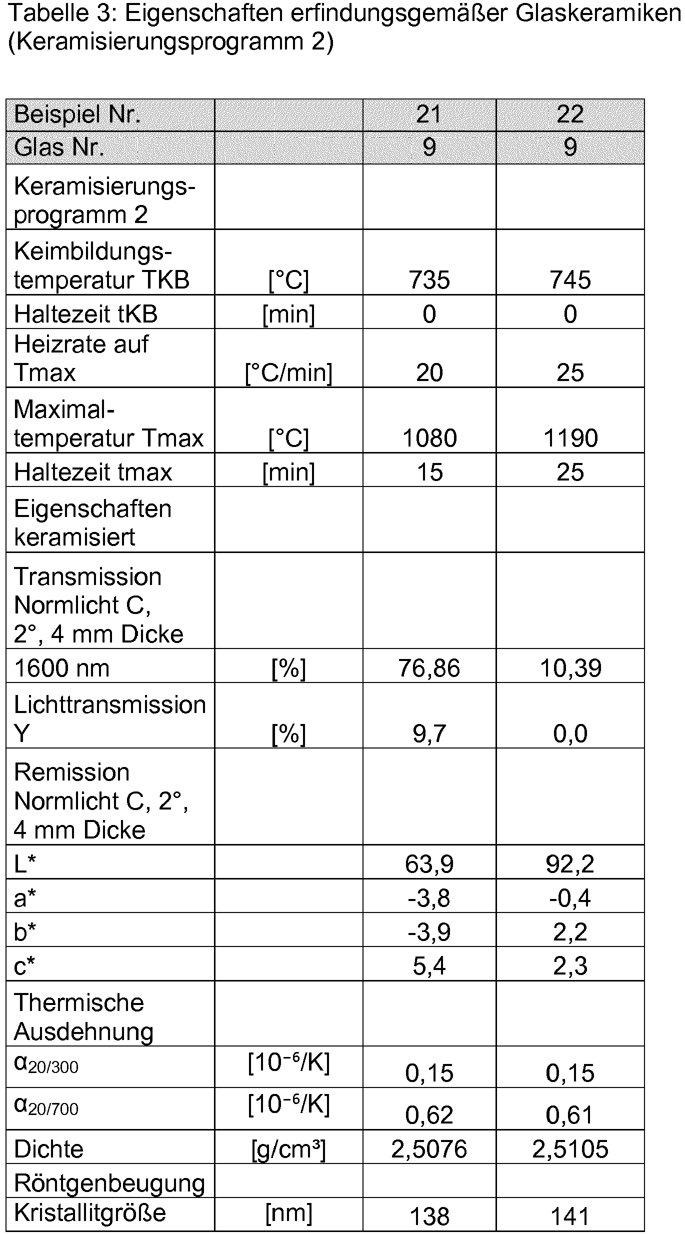

## Patentansprüche

1. Hochkristalline Lithiumaluminiumsilikat-Glaskeramik, **gekennzeichnet durch** einen Anteil an Restglasphase von weniger als 20 Gew.-% und **dadurch, dass** sie folgende Komponenten in Gew.-% auf Oxidbasis enthält:
| | |
|---|---|
| Li₂O | > 4,0 - 4,6 |
| Na₂O+K₂O | 0 - < 0,4 |
| MgO | 0,2 - 0,8 |
| CaO+SrO | 0,05 - 1,0 |
| BaO | 0 - < 0,5 |
| ZnO | 1,0 - 2,0 |
| Al₂O₃ | 19 - 23 |
| SiO₂ | 66 - < 70 |
| TiO₂ | 2,0 - 2,4 |
| ZrO₂ | 1,6 - < 2,0 |
| SnO₂ | 0 - 0,4 |
| P₂O₅ | 0 - 3 |
| B₂O₃ | 0 - 1,0 |
sowie gegebenenfalls Zusätze chemischer Läutermittel wie As₂O₃, Sb₂O₃, CeO₂ und Läuterzusätze wie Manganoxid, Sulfat-, Chlorid-, Fluoridverbindungen in Gesamtgehalten bis zu 2,0 Gew.-%.

2. Lithiumaluminiumsilikat-Glaskeramik nach Anspruch 1,
**gekennzeichnet durch** eine Zusammensetzung die im Wesentlichen besteht aus (in Gew.-% auf Oxidbasis):
| | |
|---|---|
| Li₂O | > 4,0 - 4,5 |
| Na₂O+K₂O | 0,05 - 0,3 |
| MgO | 0,2 - 0,8 |
| CaO+SrO | 0,1 - 0,8 |
| BaO | 0 - 0,3 |
| ZnO | 1,1 - 2,0 |
| Al₂O₃ | 19 - 23 |
| SiO₂ | 66 - 69 |
| TiO₂ | 2,0 - 2,4 |
| ZrO₂ | 1,6 - < 2,0 |
| SnO₂ | 0 - 0,2 |
| P₂O₅ | 0 - 1,5 |
| B₂O₃ | 0 - 0,5 |
| As₂O₃ | 0 - 1,0 |
sowie gegebenenfalls mit Läuterzusätzen wie Manganoxid, Sulfat-, Chlorid-, Fluoridverbindungen in Gesamtgehalten bis zu 1,0 Gew.-%.

3. Lithiumaluminiumsilikat-Glaskeramik nach einem der vorhergehenden Ansprüche, **gekennzeichnet durch** eine Zusammensetzung (in Gew.-% auf Oxidbasis):
| | |
|---|---|
| Li₂O | > 4,0 - 4,3 |
| Na₂O | 0,05 - 0,25 |
| K₂O | 0 - 0,15 |
| mit Na₂O+K₂O | 0,05 - 0,25 |
| MgO | 0,3 - 0,8 |
| CaO+SrO | 0,3 - 0,8 |
| BaO | 0 - 0,2 |
| ZnO | 1,3 - 1,9 |
| Al₂O₃ | 19 - 23 |
| SiO₂ | 66 - 69 |
| TiO₂ | 2,1 - 2,4 |
| ZrO₂ | 1,6 - 1,9 |
| SnO₂ | 0 < 0,15 |
| P₂O₅ | < 0,1 |
| B₂O₃ | 0 < 0,1 |
| As₂O₃ | 0 - 0,9 |

4. Lithiumaluminiumsilikat-Glaskeramik nach einem der vorhergehenden Ansprüche, **dadurch gekennzeichnet, dass** der As₂O₃-Gehalt 0,1 - 1 Gew.-%, bevorzugt 0,2 - 0,9 Gew.-%, beträgt,

5. Lithiumaluminiumsilikat-Glaskeramik nach einem der vorhergehenden Ansprüche, **dadurch gekennzeichnet, dass** der SnO₂ -Gehalt 0,05 - 0,4 Gew.-%, bevorzugt 0,05 - 0,3 Gew.-%, besonders bevorzugt 0,05 - 0,2 Gew.-%, beträgt und dass die Glaskeramik technisch frei ist von As₂O₃ und Sb₂O₃,

6. Lithiumaluminiumsilikat-Glaskeramik nach einem der vorhergehenden Ansprüche, **dadurch gekennzeichnet, dass** die Summe Na₂O + K₂O < 0,2 Gew.-% beträgt.

7. Lithiumaluminiumsilikat-Glaskeramik nach einem der vorhergehenden Ansprüche, **dadurch gekennzeichnet, dass** der MgO-Anteil 0,4 - 0,8 Gew.-% beträgt.

8. Lithiumaluminiumsilikat-Glaskeramik nach einem der vorhergehenden Ansprüche, **dadurch gekennzeichnet, dass** der BaO-Anteil < 0,1 Gew.-% beträgt.

9. Lithiumaluminiumsilikat-Glaskeramik nach einem der vorhergehenden Ansprüche, **gekennzeichnet durch** das Verhältnis der Summengehalte in Gew.-% (CaO + SrO) / (Na₂O + K₂O + BaO) > 1.

10. Lithiumaluminiumsilikat-Glaskeramik nach einem der vorhergehenden Ansprüche, **dadurch gekennzeichnet, dass** die Summe aus Na₂O, K₂O, CaO, SrO und BaO zwischen 0,5 Gew.-% und 0,9 Gew.-% beträgt.

11. Lithiumaluminiumsilikat-Glaskeramik nach einem der vorhergehenden Ansprüche, **gekennzeichnet durch** einen Fe₂O₃-Gehalt von 0,008 bis 0,02 Gew.-%.

12. Lithiumaluminiumsilikat-Glaskeramik nach einem der vorhergehenden Ansprüche, **dadurch gekennzeichnet, dass** sie Hochquarz-Mischkristalle als Hauptkristallphase enthält.

13. Lithiumaluminiumsilikat-Glaskeramik nach einem der Ansprüche 1 bis 11, **dadurch gekennzeichnet, dass** sie Keatit-Mischkristalle als Hauptkristallphase enthält und dass der Anteil an Restglasphase weniger als 5 Gew.-% beträgt.

14. Glaskeramikplatte bestehend aus einer Glaskeramik nach mindestens einem der vorhergehenden Ansprüche, **gekennzeichnet durch** eine Dicke von 2 mm bis 20 mm.

15. Verwendung eines Gegenstands, der eine Glaskeramikplatte nach Anspruch 14 umfasst, als Brandschutzglas, Kaminsichtscheibe, Backofensichtscheibe, Kochfläche ggf. mit Unterseitenbeschichtung, Abdeckung im Beleuchtungssektor und als Sicherheitsglas optional im Laminatverbund, als Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden, oder als chemisch resistente Laborausstattung, als glaskeramischer Gegenstand für Hoch- oder extreme Niedrigtemperaturanwendungen, als Ofenfenster für Verbrennungsöfen, als Hitzeschild zur Abschirmung heißer Umgebungen, als Abdeckung für Reflektoren, Flutlichter, Projektoren, Beamer, Fotokopierer, für Anwendungen mit thermo-mechanischer Belastung, beispielsweise in Nachtsichtgeräten oder als Abdeckung für Heizelemente, insbesondere als Koch- oder Bratfläche, als weiße Ware, als Heizkörperabdeckung, als Wafersubstrat, als transluzenter Gegenstand mit UV-Schutz, als Fassadenplatte oder als Bestandteil eines elektronischen Gerätes.

16. Verwendung einer Glaskeramikplatte nach Anspruch 14, die transparent ist und Hochquarz-Mischkristalle als Hauptkristallphase aufweist, in einem transparenten Scheibenlaminat für Sicherheitsanwendungen, wobei die Dicke der transparenten Glaskeramikplatte mehr als 6 mm beträgt.

17. Verwendung eines Gegenstands, der eine Glaskeramikplatte nach Anspruch 14 umfasst, die Keatit-Mischkristalle als Hauptkristallphase enthält und deren Anteil an Restglasphase vorzugsweise weniger als 5 Gew.-% beträgt und deren thermische Ausdehnung von 25 °C bis 50 °C vorzugsweise weniger als 0 ± 0,3 • 10⁻⁶/K beträgt, als Präzisionsbauteil bei Raumtemperatur, wie z. B. als Abstandsnormale oder als Wafer Stages, als Spiegelträgermaterial für reflektierende optische Bauteile wie in der Astronomie und in der LCD- oder EUV-Lithografie, oder als Lasergyroskop.

## Claims

1. Highly crystalline lithium aluminium silicate glass-ceramic, **characterized by** a proportion of residual glass phase of less than 20% by weight and in that it contains the following components in % by weight on an oxide basis:
| | |
|---|---|
| Li₂O | > 4.0 - 4.6 |
| Na₂O+K₂O | 0 - < 0.4 |
| MgO | 0.2 - 0.8 |
| CaO+SrO | 0.05 - 1.0 |
| BaO | 0 - < 0.5 |
| ZnO | 1.0 - 2.0 |
| Al₂O₃ | 19 - 23 |
| SiO₂ | 66 - < 70 |
| TiO₂ | 2.0 - 2.4 |
| ZrO₂ | 1.6 - < 2.0 |
| SnO₂ | 0 - 0.4 |
| P₂O₅ | 0 - 3 |
| B₂O₃ | 0 - 1.0 |
and optionally additions of chemical refining agents such as As₂O₃, Sb₂O₃, CeO₂ and of refining additives such as manganese oxide, sulphate compounds, chloride compounds, fluoride compounds in total contents up to 2.0% by weight.

2. Lithium aluminium silicate glass-ceramic according to Claim 1,
**characterized by** a composition which consists essentially of (in % by weight on an oxide basis):
| | |
|---|---|
| Li₂O | > 4.0 - 4.5 |
| Na₂O+K₂O | 0.05 - 0.3 |
| MgO | 0.2 - 0.8 |
| CaO+SrO | 0.1 - 0.8 |
| BaO | 0 - 0.3 |
| ZnO | 1.1 - 2.0 |
| Al₂O₃ | 19 - 23 |
| SiO₂ | 66 - 69 |
| TiO₂ | 2.0 - 2.4 |
| ZrO₂ | 1.6 - < 2.0 |
| SnO₂ | 0 - 0.2 |
| P₂O₅ | 0 - 1.5 |
| B₂O₃ | 0 - 0.5 |
| As₂O₃ | 0 - 1.0 |
and optionally refining additives such as manganese oxide, sulphate compounds, chloride compounds, fluoride compounds in total contents of
up to 1.0% by weight.

3. Lithium aluminium silicate glass-ceramic according to either of the preceding claims, **characterized by** a composition (in % by weight on an oxide basis):
| | |
|---|---|
| Li₂O | > 4.0 - 4.3 |
| Na₂O | 0.05 - 0.25 |
| K₂O | 0 - 0.15 |
| Na₂O+K₂O | 0.05 - 0.25 |
| MgO | 0.3 - 0.8 |
| CaO+SrO | 0.3 - 0.8 |
| BaO | 0 - 0.2 |
| ZnO | 1.3 - 1.9 |
| Al₂O₃ | 19 - 23 |
| SiO₂ | 66 - 69 |
| TiO₂ | 2.1 - 2.4 |
| ZrO₂ | 1.6 - 1.9 |
| SnO₂ | 0 < 0.15 |
| P₂O₅ | < 0.1 |
| B₂O₃ | 0 < 0.1 |
| As₂O₃ | 0 - 0.9. |

4. Lithium aluminium silicate glass-ceramic according to any of the preceding claims, **characterized in that** the As₂O₃ content is 0.1-1% by weight, preferably 0.2-0.9% by weight.

5. Lithium aluminium silicate glass-ceramic according to any of the preceding claims, **characterized in that** the SnO₂ content is 0.05-0.4% by weight, preferably 0.05-0.3% by weight, particularly preferably 0.05-0.2% by weight, and **in that** the glass-ceramic is technically free of As₂O₃ and Sb₂O₃.

6. Lithium aluminium silicate glass-ceramic according to any of the preceding claims, **characterized in that** the sum of Na₂O + K₂O is < 0.2% by weight.

7. Lithium aluminium silicate glass-ceramic according to any of the preceding claims, **characterized in that** the proportion of MgO is 0.4-0.8% by weight.

8. Lithium aluminium silicate glass-ceramic according to any of the preceding claims, **characterized in that** the proportion of BaO is < 0.1% by weight.

9. Lithium aluminium silicate glass-ceramic according to any of the preceding claims, **characterized by** a ratio of the total contents in % by weight of (CaO + SrO) / (Na₂O + K₂O + BaO) of > 1.

10. Lithium aluminium silicate glass-ceramic according to any of the preceding claims, **characterized in that** the sum of Na₂O, K₂O, CaO, SrO and BaO is in the range from 0.5% by weight to 0.9% by weight.

11. Lithium aluminium silicate glass-ceramic according to any of the preceding claims, **characterized by** an Fe₂O₃ content of from 0.008 to 0.02% by weight.

12. Lithium aluminium silicate glass-ceramic according to any of the preceding claims, **characterized in that** it contains high-quartz mixed crystals as main crystal phase.

13. Lithium aluminium silicate glass-ceramic according to any of Claims 1 to 11, **characterized in that** it contains keatite mixed crystals as main crystal phase and **in that** the proportion of residual glass phase is less than 5% by weight.

14. Glass-ceramic plate consisting of a glass-ceramic according to at least one of the preceding claims, **characterized by** a thickness of from 2 mm to 20 mm.

15. Use of an article which comprises a glass-ceramic plate according to Claim 14 as fire protection glass, chimney sight glass, oven window, cooking area optionally with underside coating, covering in the illumination sector and as safety glass, optionally in the form of laminate, as support plate or oven lining in the ceramics, solar or pharmaceutical industry or medical technology, in particular for production processes under high-purity conditions, as lining of ovens in which chemical or physical coating processes are carried out or as chemically resistant laboratory equipment, as glass-ceramic article for high-temperature or extremely low-temperature applications, as furnace window for combustion furnaces, as heat shield for shielding hot environments, as covering for reflectors, floodlights, projectors, beamers, photocopiers, for applications subject to thermomechanical stress, for example in night vision appliances or as covering for heating elements, in particular as cooking or frying surface, as white goods, as heating element covering, as wafer substrate, as translucent article with UV protection, as wall tile or as constituent of an electronic appliance.

16. Use of a glass-ceramic plate according to Claim 14 which is transparent and has high-quartz mixed crystals as main crystal phase in a transparent plate laminate for safety applications, where the thickness of the transparent glass-ceramic plate is more than 6 mm.

17. Use of an article comprising a glass-ceramic plate according to Claim 14 which contains keatite mixed crystals as main crystal phase and whose proportion of residual glass phase is preferably less than 5% by weight and whose thermal expansion in the range from 25°C to 50°C is preferably less than 0 ± 0.3 • 10⁻⁶/K as precision component at room temperature, for example as spacer or as wafer stages, as mirror support material for reflective optical components as in astronomy and in LCD or EUV lithography or as laser gyroscope.

## Revendications

1. Vitrocéramique à base de silicate de lithium et d'aluminium, hautement cristalline, **caractérisée par** une proportion de phase vitreuse résiduelle inférieure à 20% en poids et en ce qu'elle contient les composants suivants en % en poids sur base des oxydes :
| | |
|---|---|
| Li₂O | > 4,0-4,6 |
| Na₂O + K₂O | 0 - < 0,4 |
| MgO | 0,2-0,8 |
| CaO + SrO | 0,05-1,0 |
| BaO | 0 - < 0,5 |
| ZnO | 1,0-2,0 |
| Al₂O₃ | 19-23 |
| SiO₂ | 66 < 70 |
| TiO₂ | 2,0-2,4 |
| ZrO₂ | 1,6 - < 2,0 |
| SnO₂ | 0-0,4 |
| P₂O₅ | 0-3 |
| B₂O₃ | 0-1,0 |
ainsi que le cas échéant des additifs d'agents d'affinage chimiques tels que As₂O₃, Sb₂O₃, CeO₂ et des additifs d'affinage tels que l'oxyde de manganèse, des composés de type sulfate, chlorure, fluorure, en des teneurs totales de jusqu'à 2,0% en poids.

2. Vitrocéramique à base de silicate de lithium et d'aluminium selon la revendication 1, **caractérisée par** une composition qui est essentiellement constituée par (en % en poids sur base des oxydes) :
| | |
|---|---|
| Li₂O | > 4,0-4,5 |
| Na₂O + K₂O | 0, 05-0, 3 |
| MgO | 0,2-0,8 |
| CaO + SrO | 0,1-0,8 |
| BaO | 0-0,3 |
| ZnO | 1,1-2,0 |
| Al₂O₃ | 19-23 |
| SiO₂ | 66-69 |
| TiO₂ | 2,0-2,4 |
| ZrO₂ | 1,6 - < 2,0 |
| SnO₂ | 0-0,2 |
| P₂O₅ | 0-1,5 |
| B₂O₃ | 0-0,5 |
| As₂O₃ | 0-1,0 |
ainsi que le cas échéant des additifs d'affinage tels que l'oxyde de manganèse, des composés de type sulfate, chlorure, fluorure, en des teneurs totales de jusqu'à 1,0% en poids.

3. Vitrocéramique à base de silicate de lithium et d'aluminium selon l'une quelconque des revendications précédentes, **caractérisée par** une composition (en % en poids sur base des oxydes) :
| | |
|---|---|
| Li₂O | > 4,0-4,3 |
| Na₂O | 0, 05-0, 25 |
| K₂O | 0-0, 15 |
| avec Na₂O + K₂O | 0, 05-0, 25 |
| MgO | 0,3-0,8 |
| CaO + SrO | 0,3-0,8 |
| BaO | 0-0,2 |
| ZnO | 1,3-1,9 |
| Al₂O₃ | 19-23 |
| SiO₂ | 66-69 |
| TiO₂ | 2,1-2,4 |
| ZrO₂ | 1,6-1,9 |
| SnO₂ | 0 < 0,15 |
| P₂O₅ | < 0,1 |
| B₂O₃ | 0 < 0,1 |
| As₂O₃ | 0-0,9 |

4. Vitrocéramique à base de silicate de lithium et d'aluminium selon l'une quelconque des revendications précédentes, **caractérisée en ce que** la teneur en As₂O₃ est de 0,1-1% en poids, de préférence de 0,2-0,9% en poids.

5. Vitrocéramique à base de silicate de lithium et d'aluminium selon l'une quelconque des revendications précédentes, **caractérisée en ce que** la teneur en SnO₂ est de 0,05-0,4% en poids, de préférence de 0,05-0,3% en poids, de manière particulièrement préférée de 0,05-0,2% en poids et **en ce que** la vitrocéramique est techniquement exempte de As₂O₃ et Sb₂O₃.

6. Vitrocéramique à base de silicate de lithium et d'aluminium selon l'une quelconque des revendications précédentes, **caractérisée en ce que** la somme Na₂O + K₂O est < 0,2% en poids.

7. Vitrocéramique à base de silicate de lithium et d'aluminium selon l'une quelconque des revendications précédentes, **caractérisée en ce que** la proportion de MgO est de 0,4-0,8% en poids.

8. Vitrocéramique à base de silicate de lithium et d'aluminium selon l'une quelconque des revendications précédentes, **caractérisée en ce que** la proportion de BaO est < 0,1% en poids.

9. Vitrocéramique à base de silicate de lithium et d'aluminium selon l'une quelconque des revendications précédentes, **caractérisée par** le rapport des teneurs totales en % en poids (CaO + SrO)/(Na₂O + K₂O + BaO) > 1.

10. Vitrocéramique à base de silicate de lithium et d'aluminium selon l'une quelconque des revendications précédentes, **caractérisée en ce que** la somme de Na₂O, K₂O, CaO, SrO et BaO est comprise entre 0,5% en poids et 0,9% en poids.

11. Vitrocéramique à base de silicate de lithium et d'aluminium selon l'une quelconque des revendications précédentes, **caractérisée par** une teneur en Fe₂O₃ de 0,008 à 0,02% en poids.

12. Vitrocéramique à base de silicate de lithium et d'aluminium selon l'une quelconque des revendications précédentes, **caractérisée en ce qu'**elle contient des cristaux mixtes de quartz bêta en tant que phase cristalline principale.

13. Vitrocéramique à base de silicate de lithium et d'aluminium selon l'une quelconque des revendications 1 à 11, **caractérisée en ce qu'**elle contient des cristaux mixtes de kéatite comme phase cristalline principale et **en ce que** la proportion de phase vitreuse résiduelle est inférieure à 5% en poids.

14. Plaque en vitrocéramique constituée par une vitrocéramique selon au moins l'une quelconque des revendications précédentes, **caractérisée par** une épaisseur de 2 mm à 20 mm.

15. Utilisation d'un objet, qui comprend une plaque en vitrocéramique selon la revendication 14, comme verre de protection contre le feu, vitre de foyer, vitre de four, surface de cuisson présentant le cas échéant un revêtement de la surface inférieure, recouvrement dans le secteur de l'éclairage et comme verre de sécurité éventuellement dans un composite feuilleté, comme plaque support ou revêtement de four dans l'industrie céramique, solaire ou pharmaceutique ou la technique médicale, en particulier pour des procédés de production dans des conditions de haute pureté, comme revêtement de fours dans lesquels des procédés de revêtement chimiques ou physiques sont réalisés, ou comme équipement chimiquement résistant du laboratoire, comme objet vitrocéramique pour des applications à des températures élevées ou extrêmement basses, comme vitre de four pour des fours de combustion, comme écran thermique pour la protection d'environnements chauds, comme recouvrement pour des réflecteurs, des illuminations, des projecteurs, des vidéoprojecteurs, des photocopieuses, pour des utilisations comprenant une sollicitation thermomécanique, par exemple dans des appareils de vision nocturne, ou comme revêtement pour des éléments chauffants, en particulier comme surface de cuisson ou de rôtissage, comme électroménager, comme recouvrement de corps de chauffe, comme substrat de plaquette, comme objet translucide présentant une protection contre les UV, comme plaque de façade ou comme constituant d'un appareil électronique.

16. Utilisation d'une plaque vitrocéramique selon la revendication 14, qui est transparente et qui présente des cristaux mixtes de quartz bêta comme phase cristalline principale, dans un verre feuilleté transparent pour des applications de sécurité, l'épaisseur de la plaque vitrocéramique transparente étant supérieure à 6 mm.

17. Utilisation d'un objet, qui comprend une plaque en vitrocéramique selon la revendication 14, qui contient des cristaux mixtes de kéatite comme phase cristalline principale et dont la proportion de phase vitreuse résiduelle est de préférence inférieure à 5% en poids et dont la dilatation thermique à 25°C jusqu'à 50°C est de préférence inférieure à 0 ± 0,3 * 10⁻⁶/K, comme pièce de précision à température ambiante, comme par exemple comme étalon de distance ou porte-plaquette, comme matériau support de miroir pour des pièces optiques réfléchissantes comme dans l'astronomie et dans la lithographie d'affichages à cristaux liquides ou par ultraviolets extrêmes ou comme gyroscope laser.
